# EUROPEAN PATENT APPLICATION

(11) **EP 1 365 536 A1**
(43) Date of publication of application: **26.11.2003**
(21) Application number: 02712408.0
(22) Date of filing: 18.02.2002
(51) Int. Cl.: H04L 9/00, G06F 17/60

(54) **INFORMATION PROCESSING APPARATUS AND METHOD, AND STORAGE MEDIUM**

(30) Priority: 26.02.2001 JP 2001050781
(71) Applicant: Sony Corporation, Tokyo 141-0001 (JP)
(72) Inventor: Iino, Yoichiro, Shinagawa-ku, Tokyo 141-0001 (JP)
(74) Representative: Horner, David Richard
(86) International application number: JP0201337
(87) International publication number: WO02069557

(57) **Abstract**

In a system that uses a hardware mechanism to move digital information without permitting reproduction, a record concerning a movement of the digital information, that is, a transfer history, is stored. When recovering the digital information, by analyzing the transfer history, it can be indicated at what time alteration of hardware reproduced the identification. By using a nested structure as the data structure of the transfer history, durability against falsification of the transfer history by a misuser during distribution is also realized while the number of calculations required for transfer history check in each transfer is set to a fixed value which does not depend on the number of transfers.

## Description

### [Technical Field]

The present invention relates to information processing apparatuses and methods, and storage media for protecting, from misuse, various types of digital information including electronic tickets such as transportation tickets, pass checks, membership cards, permission slips, and service coupons, and in particularly, to an information processing apparatus and method, and a storage medium for protecting, by holding digital information in durable hardware, the digital information from misuse in the process of repeatedly transferring the digital information among a plurality of apparatuses.

More specifically, the present invention relates to an information processing apparatus and method, a storage medium for protecting digital information from misuse in the process of repeatedly transferring the digital information among a plurality of apparatuses, even if the hardware of a certain device has been analyzed or altered, and in particular, to an information processing apparatus and method, and a storage medium for suppressing potential intention leading to an analysis or alteration of hardware by detecting digital information misuse based on an analysis or alteration of hardware.

### [Background Art]

With the rapid progress in the information processing and information communication technologies, various types of information have become able to be used on computers. In addition, information has become able to be shared and distributed among a plurality of systems by means of computer networks and media. With explosively wide use of the Internet, digital information can be immediately delivered and distributed. In other words, even information resources existing in a distant place can be easily and immediately acquired from anywhere if they are simply digitalized or computerized. For example, content such as video and music, and value information such as concert tickets are digitized and are distributed and sold on a network. Now, digital information, itself, is an economically valuable item in trade.

However, also regarding the intrinsic advantage of digital information in that transmission and sharing of information is facilitated, a new problem has occurred due to expansion in the applicable range of the information. Because information in digital form is very easy to duplicate and falsify, and it is exposed and vulnerable to various fraudulent activity. In particular, regarding information that should be protected by copyright, such as software and music information, and information in which uniqueness is important, such as certificates and securities, it is insufficient to only enforce a copyright law and other legal restrictions concerning duplication and falsification of information. Accordingly, from an information technological viewpoint, it is necessary to improve protection.

Conventionally, for example, music information has been distributed and sold in a form recorded on media such as CDs and records. Since complete reproduction from these recording media is technically difficult, the use of reproductions has not become a big problem. However, in recent years, personal computers (PCs) and peripheral devices, which are also information duplicating tools, have been developed and have become able to be inexpensively bought even by common consumers. Accordingly, digital information can be extracted from the recording media in complete form and can be easily handled, and its processing has become facilitated. In addition, a situation occurs in which the music information obtained as described is illegally distributed to an unspecified number of persons through a network. This greatly threatens creators of content such as music, or content copyright owners, and an industrial world that has used the information content as goods. Permitting rampant misuse of information content makes creators of content such as music and software developers to lose motivation and imagination, and industrial activities themselves may stagnate.

Also, regarding certificates such as transportation tickets, admission tickets, membership cards, permission slips, and service coupons, and securities, by using paper which is specially treated (e.g., a watermark, a special print and pattern, a seal, etc.) so as not to be easily duplicated or forged, or another medium, certificate or securities information has been recorded on the paper or medium. Even in a case in which certificate or securities information, itself, is duplicated, if paper bearing the information does not exist (i.e., the special treatment is not detected), invalidation of the effect of the information has prevented a value represented by the certificate or securities from being duplicated.

Regarding this type of certificate and securities, conversion into digital information enables distribution and sale on a computer network in the form of a so-called "electronic ticket". For example, regarding concert tickets and air tickets, etc., it has also been possible to make reservations by means of telephone networks or computer networks. However, forwarding by mail or delivery by hand has been used for final reception of tickets. Conversely, according to the electronic tickets, reservation and purchase can be completed by the same procedure. Thus, consumers are free from the inconvenience of going to stores, and sellers can reduce a ticket distribution cost and a ticket management cost and can have increased profit. In other words, according to the electronic tickets, conveniences of digital information conveyance can be utilized. However, to widely use the electronic tickets, it is necessary to technically ensure duplication and falsification of digital information, as in the case of digital content such as music.

Accordingly, recently, many systems that can use electronic information while preventing duplication have been proposed.

For protection of digital information, a system in which content encrypted by using a predetermined encryption key is distributed and sold is common and has already been widely employed. For example, it is possible to charge for the use of information in a form of selling the encryption key. For the circulation and distribution of the encryption key, in many cases, the encryption key, itself, is digitized. In this case, similarly to information to be originally distributed and sold, such as content and tickets, encryption keys are easily reproduced and falsified. Accordingly, the keys must be technically protected.

For example, Japanese Unexamined Patent Application Publication No. 11-328850, which has already been assigned to the present Applicant, discloses an information delivery system which achieves sufficient protection of content and which performs valid charging. According to the publication, a content server includes a content database which stores content encrypted by using a C key and the C key. The content encrypted by using the C key and the C key are encrypted by using an M key, and are sent to a user machine. In the user machine, the content encrypted by using the C key and the C key is stored in a storage device. In a playback mode, the content encrypted by using the C key and the C key from the storage device are sent and decrypted in an encryption/decryption processing chip, and charging is performed in accordance with the C key. In addition, a DA code which dynamically changes with an elapse of time is added to the C key. By adding the DA code, the misuse of content can be prevented, with the C key saved, and by using the DA code, the period of using the content can be limited, and the content can be lent and borrowed.

Since the publication shows a method for treating a relatively large amount of electronic information, the electronic information is held in a common storage device so as not to be reproduced or falsified. A key for encryption cannot be read because it is built into the hardware of the holding device. Thus, if the electronic information held is read, it cannot be decrypted and used. When the electronic information is used, it is decrypted and used in a circuit in the hardware, and the encrypted electronic information is prevented from leaking to the exterior. The use of the hardware restricts the use of the electronic information, thus preventing the electronic information from being reproduced.

Also, in the case of a security system using IC cards, by distributing and exchanging keys between IC cards, the security of information can be maintained in the form of hardware. Information such as keys is held in a semiconductor memory in which electronic information stored in an IC card cannot be freely read and written (or which has tamper resistance). Only a person who knows an authentication key can read and write the information. Accordingly, a person who uses an authentication key carefully moves the electronic information in an IC card without reproducing the information, whereby reproduction of the electronic information can be prevented while the electronic information is exchanged between IC cards. For example, after information is moved to another IC card, the content of the original IC card is always deleted (normally realized by hardware).

In addition, in the system "MagicGate Memory Stick" provided by Sony Corporation, an information security based on a mechanism similar to IC cards is put into practical use. In the MagicGate, after two IC cards are first authenticated by each other, a key is handed over from one device to the other device, and the key is finally erased from the original device. In this system, restriction of properties such as ease of reproduction and falsification can be realized while ease of movement of the digital information is still maintained. In a system that protects digital information by using specific hardware such as IC cards, it is a very important precondition that the system ensures durability (tamper resistance) against analysis and alteration of hardware. As described above, the mechanism that holds the digital information so as not to be reproduced and falsified has a large advantage, and is regarded as a technology that will be utilized from now on. Thus, hardware in which analyses and alteration are more difficult so that hardware durability cannot be broken needs to be developed and employed.

However, the hardware is an artifact and is hardly perfect. In other words, it is not impossible to break a key regardless of a cost (or if an economical value for recovering the cost can be found in digital information obtained by breaking the key). Accordingly, not only an improvement in the hardware durability, but also detection of an analysis or change if it is performed, and minimization of damage caused by it, are important.

In particular, when the durability of hardware is sufficiently enhanced, an analysis or change thereon must be deliberate and systematic. Also in this case, regarding whether to analyze or alter the hardware, the feasibility (i.e., the economical value of information) of recovering the cost by misuse of the information which is caused by the analysis or change is important. Therefore, in other words, that an unauthorized person can be identified by easily detecting misuse enabled by an analysis and alteration makes it difficult for the unauthorized person to run away after misusing the information. As a result, it is deemed that the identification is very effective in suppressing potential intention leading to an analysis or alteration of hardware.

### [Disclosure of Invention]

In view of the above technical issues, an object of the present invention is to propose a mechanism in which, when an improper analysis of hardware is performed, thus enabling reproduction of digital information which is held not to be reproduced, and the reproductions are distributed in a relatively large scale, the incident can be detected, and it can be indicated which item of hardware has been improperly analyzed.

In the mechanism, first, each content item is provided with uniqueness and is distributed, and when content items are later recovered, and a plurality of identical content item are found, content reproduction in the process of distribution is indicated. In addition, a transfer history is attached to each content item, and it can be indicated at what time transfer of the content item to a plurality of holding apparatuses occurs.

The present invention is made in view of the above problems, and a first aspect thereof provides an information processing apparatus for performing inter-apparatus content exchange, comprising:
communication means for transmitting and/or receiving content and a transfer history of the content;
unique information holding means for holding apparatus-unique information;
authentication means for performing mutual authentication with a content-exchanging apparatus of another party;
content holding means for holding the content; and
transfer history management means for managing the transfer history of the content.

Here, the authentication means and, for example, the content-exchanging apparatus of the other party mutually authenticate electronic signatures of both.

Also, in a content receiving mode, the transfer history management means generates a nonce; and
in a content transmitting mode, the transfer history management means makes a transfer history which is a record concerning a content movement by adding, to the transfer history of the content, a new record including apparatus-unique information SID on a content transmitting side, apparatus-unique information RID on a content receiving side, a nonce TN generated by the content receiving side, and an electronic signature TSG for the entirety of the transfer history of the content.

Accordingly, in the content receiving mode, by confirming that the end record of the transfer history of the content includes apparatus-unique information SID on the content transmitting side, apparatus-unique information RID on the content receiving side, and a nonce TN generated by the transfer history management means, and/or that the electronic signature is a valid signature of the apparatus on the content transmitting side which corresponds to the transfer history, the transfer history management means can check the transfer history of the content, and can examine whether or not unique information possessed by the content is consistent between the content transmitting and receiving sides.

In addition, by forming the transfer history in a type Of a "nested structure" in which a record includes an electronic signature TSG for the entire transfer history of content, in the calculation required for transfer history check in each content exchange, the number of times public key cryptosystem processing which requires a large number of calculations is performed is set to a fixed value that does not depend on the number of transfers, thus shortening the total calculation time. In addition, durability against transfer history falsification by a misuser in the process of content distribution is realized.

Also, the transfer history management means may send, from the content transferring side to receiving side, one in which a new record that has not been encrypted yet is added to an encrypted transfer history corresponding to previous content transfers. In this case, in an apparatus on the content receiving side, after checking the new record that has not been encrypted yet, it is encrypted by using a public key P_{CA} of a predetermined management center CA (Certification Authority), and the new record that has not been encrypted yet may be replaced with the encrypted one. In this case, the transfer history can be prevented from being read by any one excluding a predetermined system manager CA. Thus, the system manager can specify a misused content holding apparatus, and it is concealed from an ordinary content user that certain content has passed through which content holding apparatus.

Only in a case in which the authentication means can perform mutual authentication with an apparatus on another party, and the transfer history management means can confirm the validity of the transfer history of content, content exchange is performed, whereby valid content distribution and content protection are ensured. As a result, digital information, such as economically valued content such as music and video information, and content (electronic ticket) in which uniqueness is important, such as certificates and securities, can be safely moved among a plurality of apparatuses.

In addition, a second aspect of the present invention provides an information processing apparatus for recovering content distributed with a transfer history among a plurality of apparatuses,
wherein:
the transfer history includes:
   content-unique information TID; and
   records to which an addition is made whenever the content is transferred; and
the information processing apparatus comprises:
   communication means for receiving the content and the transfer history; and
   misuse detecting means for detecting misuse in the distribution process of the content by checking the transfer history.

Each record of the transfer history includes apparatus-unique information SID on a content transmitting side, apparatus-unique information RID on a content receiving side, a nonce TN generated by an apparatus on the content receiving side, and an electronic signature TSG by an apparatus on the content transmitting side for the transfer history of the content which includes all records added before the record.

Accordingly, the misuse detecting means verifies the electronic signature of each record included in the transfer history while following the records from the latest record. When a record having an inconsistent electronic signature is found, an apparatus on the content receiving side in the record, that is, an apparatus on a transmitting side in the next record from the record can be specified as a misuser.

Also, when the transfer history is encrypted by using a public key P_{CA} of a predetermined management center CA, the misuse detecting means decrypts the records included in the transfer history in order from the latest record by using a secret key S_{CA} of the management center CA, and checks the records.

When a record which cannot be duly decrypted or whose signature cannot be duly verified is detected, an apparatus receiving the record, that is, an apparatus on the transmitting side in the next record from the record, can be specified as a misuser.

Also, when an SID included in the start record of the transfer history does not indicate a predetermined content-issuing apparatus, an apparatus identified by the SID is specified as a misuser.

When a content item having the same content-unique information TID is received two or more times, the misuse detecting means searches for a branching record by comparing transfer histories possessed by the content items. The "branching record" in this context means the first differing record in a case in which a transfer history, attached to content having the same content-unique information TID, duly begins with a record of apparatus-unique information SID duly indicating a content issuing apparatus, has identical records halfway, and begins to differ from a certain record. An apparatus that is identified by apparatus-unique information SID on the content transmitting side in the detected branching record can be specified as a misuser.

In addition, a third aspect of the present invention provides an information processing method for transferring content to another apparatus, comprising:
a step for performing mutual authentication with a content-transferred apparatus;
a step for updating a transfer history of the content;
a step for transmitting the transfer history of the content to the content-transferred apparatus; and
a step for transmitting the content to the content-transferred apparatus after performing the mutual authentication and confirming a transfer history from the content-transferred apparatus.

In the step of updating the transfer history of the content, a new record which includes content-transferring-apparatus-unique information SID, content-transferred-apparatus-unique information RID, a nonce TN generated by a content receiving side, and an electronic signature TSG for the entire transfer history of the content is added to the transfer history of the content.

Accordingly, when transferred content is received, by confirming that the end record of the transfer history of the content includes content transferring apparatus information SID, content-transferred-apparatus-unique information RID, a nonce TN generated by the method, and/or that an electronic signature TSG is a valid signature of the content transferring apparatus which corresponds to the transfer history, the transfer history of the content can be checked.

In addition, by forming the transfer history in a type Of a "nested structure" in which a record includes an electronic signature TSG for the entire transfer history of content, in the calculation required for transfer history check in each content exchange, the number of times public key cryptosystem processing which requires a large number of calculations is performed is set to a fixed value that does not depend on the number of transfers, thus shortening the total calculation time. Also, durability against transfer history falsification by a misuser in the process of content distribution is realized.

In the step for updating the transfer history of the content, one in which a new record that has not been encrypted yet is added to the encrypted transfer history corresponding to performed content transfers is sent from a content transmitting side to receiving side. In response, after checking the new record, the content receiving side uses a public key P_{CA} of a predetermined management center CA to encrypt the record, and may subsequently replace the encrypted record with one obtained by encrypting a new record of a transfer history of content which has not been encrypted yet. In this case, the transfer history can be prevented from being read by any one other than a predetermined system manager. Thus, the system manager can specify a misused content holding apparatus, and it is concealed from an ordinary content user that certain content has passed through which content holding apparatus.

Also, a fourth aspect of the present invention provides an information processing method for receiving content transferred from another apparatus, wherein the method comprises:
a step for performing mutual authentication with a content transferring apparatus;
a step for transmitting a nonce TN to the content transferring apparatus;
a step for receiving a transfer history of the content from the content transferring apparatus;
a step for checking the received transfer history; and
a step for receiving the content from the content transferring apparatus.

Each record of the transfer history includes content-transferring-apparatus-unique information SID, content-transferred-apparatus-unique information RID, a nonce TN generated by the content-transferred apparatus, and an electronic signature TS by the content-transferred apparatus which corresponds to the entire transfer history of the content.

Accordingly, in the step for checking the transfer history, by confirming that the end record of the transfer history of the content includes content transferring apparatus information SID, content-transferred-apparatus-unique information RID, a nonce TN generated by the method, and/or that an electronic signature TSG is a valid signature of the content transferring apparatus which corresponds to the transfer history, the transfer history of the content is checked, and reception of content having fraud in the distribution process of content is refused.

In addition, by forming the transfer history in a type Of a "nested structure" in which a record includes an electronic signature TSG for the entire transfer history of content, in the calculation required for transfer history check in each content exchange, the number of times public key cryptosystem processing which requires a large number of calculations is performed is set to a fixed value that does not depend on the number of transfers, thus shortening the total calculation time. Also, durability against transfer history falsification by a misuser in the process of content distribution is realized.

When the transfer history of the content is encrypted, one in which a new record corresponding to the present transfer that has been unencrypted yet is added to a transfer history composed of all the encrypted records corresponding to transfers before that is received. On the content-transferred side, the new record is checked, and when it is valid, it is encrypted by using a public key P_{CA} of the predetermined management center CA. After that, a new record of the transfer history which has not been encrypted yet is replaced with the above encrypted one. This can prevent any one other than the system manager, such as CA, from knowing a secret of the distribution path of content.

In addition, a fifth aspect of the present invention provides an information processing method for recovering content distributed with a transfer history among a plurality of apparatuses,
wherein:
the transfer history includes:
   content-unique information TID; and
   records to which an addition is made whenever the content is transferred; and
the information processing method comprises:
   a step for receiving content and a transfer history; and
   a misuse detecting step for detecting misuse in the distribution process of content by checking the transfer history.

Each record of the transfer history includes content-transferring-apparatus-unique information SID, content-receiving-apparatus-unique information RID, a nonce TN generated by the content receiving apparatus, and an electronic signature TSG by the content transferring apparatus which corresponds to a transfer history of the content which consists of all records added before the record.

Therefore, in the misuse detecting step, by verifying the electronic signature of each record which is included in the transfer history while following the records from the latest record, a content transferring apparatus having given an inconsistent electronic signature can be specified as a misuser.

When the transfer history is encrypted by using a public key P_{CA} of a predetermined management center CA, the records included in the transfer history are decrypted by using a secret key S_{CA} of the management center CA and are checked in order from the latest record, and when a record which cannot be duly decrypted or whose signature cannot be duly verified is detected, an apparatus receiving the record is specified as a misuser.

Also, in the misuse detecting step, when an SID included in the start record of the transfer history does not indicate a predetermined content-issuing apparatus, an apparatus identified by the SID can be specified as a misuser.

In the misuse detecting step, when a content item having the same content-unique information is received two or more times, by comparing transfer histories possessed by the content items, a branching record is searched for. The "branching record" in this context means the first differing record in a case in which a transfer history, attached to content having the same content-unique information TID, duly begins with a record of apparatus-unique information SID duly indicating a content issuing apparatus, has identical records halfway, and begins to differ from a certain record. An apparatus that is identified by apparatus-unique information SID on the content transmitting side in the detected branching record can be specified as a misuser.

Therefore, according to an information processing apparatus or method of the present invention, first, each content item is provided with uniqueness and is distributed, and when content items are later recovered, and a plurality of identical content item are found, content reproduction in the process of distribution is indicated. In addition, a transfer history is attached to each content item, and it can be indicated at what time transfer of the content item to a plurality of holding apparatuses occurs.

Technologies similar thereto have already been proposed as part of a transferable electronic cash method. For example, techniques concerning electronic cash are described in "Disposable Zero-Knowledge Authentications and Their Applications to Untraceable Electronic Cash" (Advances in Cryptology Cryto'89, Lecture Notes in Computer Science 435, pp. 481-496, Springer-Verlag, Berlin (1989))by T. Okamoto, et al., Japanese Patent No. 2027713 "Denshi Genkin Jisshi Hoho Oyobi Sono-Sochi (Electronic Cash Implementation Method and Apparatus Therefor)", "Transferred Cash Grows in Size" (Advances in Cryptology Eurocrypt'92, Lecture Notes in Computer Science, pp. 390-407, Springer-Verlag, Berlin (1992)) by Chaum and T. P. Pedersen, etc. The above cases of electronic cash employ a method that prevents multiple payment of cash represented by digital information. However, in the methods described in the above documents, when content, that is, electronic cash, is transferred, it is required that all related transfer histories be checked. In other words, the number of calculations in proportion to the number of transfers is required. When the number of transfers increases, a defect occurs in that the number of calculations is huge. Also, any of the above documents is for a method specialized for an intended use of electronic cash, and it is difficult to apply the method to common distribution of common content such as music content.

Conversely, in an information processing apparatus and method of the present invention, by using a nested structure as the data structure of a transfer history, the number of calculations required for transfer history check for each transfer is set to a fixed value that does not depend on the number of transfers, and durability against transfer history falsification by a misuser in the process of content distribution is realized.

The present invention can be easily applied to, for example, content items satisfying the condition that each content item is distinguished, is unique in a system unless misuse is performed, and is recovered after a predetermined period.

In addition, a sixth aspect of the present invention provides a storage medium physically storing, in a computer-readable form, computer software described so that processing for transferring content to another apparatus can be executed on a computer,
wherein:
the computer software comprises:
   a step for performing mutual authentication with a content-transferred apparatus;
   a step for updating a transfer history of the content by adding a new record including content-transferring-apparatus-unique information SID, content-transferred-apparatus-unique information RID, a nonce TN generated by a content receiving side, and an electronic signature TSG for the entire transfer history of the content;
   a step for transmitting the transfer history of the content to the content-transferred apparatus; and
   a step for transmitting the content to the content-transferred apparatus after performing the mutual authentication and confirming a transfer history from the content receiving apparatus.

In addition, a seventh aspect of the present invention provides a storage medium physically storing, in a computer-readable form, computer software described so that processing for receiving content transferred from another apparatus can be executed on a computer,
wherein the computer software comprises:
a step for performing mutual authentication with a content transferring apparatus;
a step for transmitting a nonce TN to a content-transferred apparatus;
a step for receiving, from the content transferring apparatus, a transfer history of content comprising content-transferring-apparatus-unique information SID, content-transferred-apparatus-unique information RID, a nonce TN generated by the content-transferred apparatus, and an electronic signature TSG by the content-transferred apparatus which corresponds to the entire transfer history of the content;
a step for checking the transfer history of the content by confirming that the end record of the transfer history includes content-transferring-apparatus-unique information SID, content-transferred-apparatus-unique information RID, and a nonce TN generated by the software, and/or that an electronic signature TSG is a valid signature of the content-transferred apparatus which corresponds to the transfer history; and
a step for receiving the content from content transferring apparatus.

In the step for checking the transfer history, when succeeding in checking the end record of the transfer history of the content, the record may be replaced with a record obtained by using a public key P_{CA} of a predetermined management center CA to encrypt the checked record.

in addition, an eighth aspect of the present invention provides a storage medium physically storing, in a computer-readable form, computer software described so that processing for recovering content distributed with a transfer history among a plurality of apparatuses can be executed on a computer,
wherein:
the transfer history includes:
   content-unique information TID; and
   records to which an addition is made whenever the content is transferred; and
the computer software comprises:
   a step for receiving content and a transfer history; and
   a misuse detecting step for detecting misuse in the distribution process of content by checking a transfer history in response to receiving content having the same content-unique information TID two or more times.

In the misuse detecting step, when each record of the transfer history is encrypted by using a public key P_{CA} of a predetermined management center CA, the records included in the transfer history are decrypted by using a secret key S_{CA} of the management center CA and are checked in order from the latest record, and when a record which cannot be duly decrypted or whose signature cannot be duly verified is detected, an apparatus receiving the record may be specified as a misuser.

The storage medium according to each of the sixth to eighth aspects of the present invention is, for example, a medium that provides computer software in a computer-readable form to a general purpose computer system capable of executing various program codes. Such a medium is, for example, a removable and portable storage medium such as a CD (Compact Disc), FD (Flexible Disk), or MO (MagnetoOptical disc). Alternatively, provision of computer software to a particular computer system through a transmission medium such as a network (regardless of the distinction between wireless and wired networks) is also technically possible.

This storage medium defines a structurally or functionally cooperative relationship between computer software and a storage medium for implementing the functions of predetermined computer software on a computer system. In other words, by installing predetermined computer software on a predetermined computer through the storage medium according to each of the sixth to eighth aspects of the present invention, the computer has cooperative operation, and can obtain operation and advantages similar to those in the information processing method according to each of the third to fifth aspects of the present invention.

Other objects, features, and advantages of the present invention become apparent by a detailed description based on an embodiment of the present invention, which is described below, and the accompanying drawings.

### [Brief Description of the Drawings]

Fig. 1 is a schematic illustration of the configuration of a system 1 to which the present invention is applied and which holds digital information, that is, content, so as not to be reproduced.
Fig. 2 is a schematic illustration of a mechanism in which a management center (CA) 70 issues an electronic signature certificate to a content holding apparatus 10, a content issuing apparatus 30, a content recovering apparatus 50.
Fig. 3 is a schematic illustration of the configuration of content.
Fig. 4 is a flowchart showing a process for confirming no falsification of the content shown in Fig. 3.
Fig. 5 is an illustration showing another configuration of content in which content can be identified.
Fig. 6 is a flowchart showing a process for confirming no falsification of the content shown in Fig. 5.
Fig. 7 is a schematic, functional block diagram showing the structure of a content holding apparatus 10 applicable to the present invention.
Fig. 8 is a schematic, functional block diagram showing the structure of a content issuing apparatus 30 applicable to the present invention.
Fig. 9 is a schematic, functional block diagram showing a content recovering apparatus 50 applicable to the present invention.
Fig. 10 is an illustration of a process for an authentication procedure (in the case of not using a transfer history) between a content transferring apparatus and transferred apparatus.
Fig. 11 is an illustration of a content transfer procedure between a content transferring apparatus and transferred apparatus after an authentication procedure by both apparatuses.
Fig. 12 is an illustration of one example of the data structure of a transfer history.
Fig. 13 is a schematic illustration of a procedure for exchanging transfer histories performed between a content transferring apparatus and transferred apparatus.
Fig. 14 is a flowchart showing a process for digital signature authentication from a content holding apparatus on a transferring side to a content holding apparatus on a transferred side.
Fig. 15 and Fig. 16 are flowcharts showing a process for detecting misuse and identifying a content holding apparatus in misuse by using a content transfer history.
Fig. 17 is an illustration of a public key P_{CA} included in the content having the configuration shown in Fig. 3.
Fig. 18 is an illustration of public key P_{CA} included in the content having the configuration shown in Fig. 5.
Fig. 19 is an illustration of all encrypted records other than content identification number TID.
Fig. 20 is a schematic illustration of a content transfer process in the case of encrypting a transfer history.
Fig. 21 is a schematic block diagram showing the structure of a content holding apparatus 10 which performs content movement associated with passing of a transfer history.
Fig. 22 is a schematic block diagram showing the structure of a content issuing apparatus 30 which performs content movement associated with passing of a transfer history.
Fig. 23 is a flowchart showing a process for exchanging content between content holding apparatuses in the case of adding a transfer history.

### [Best Mode for Carrying Out the Invention]

Embodiments of the present invention are fully described below with reference to the drawings.

Before describing the embodiment of the present invention, some terms in the cryptosystem technology which are used in the present invention are first described.

### Common Key Cryptosystem

In the present invention, an algorithm called a "common key cryptosystem", and algorithms called a "public key cryptosystem" and an "electronic signature" are used. The common key cryptosystem is also called the "symmetric cryptosystem", and is a cryptosystem algorithm having properties in which a key for use in encrypting data and a key for use in decrypting the data are the same, or even when both keys are different, from one key, the other key is easily calculated.

Typical common key cryptosystems include the "DES (data encryption standard)" and Triple DES approved as standard cryptosystems by the United States of America, Department of Commerce, Standards Division, and "FEAL (fast data encipherment algorithm)" of NTT.

In the following, the case of obtaining a code c by using a content key K to encrypt m is represented by c = E(K, m) , and decryption of the code is represented by m' D(K', c). In this case, if the encryption key K and the decryption key K' match each other, m and m' match each other.

### Public Key Cryptosystem

A public key cryptosystem is called an "asymmetric cryptosystem", and is a cryptosystem algorithm having properties in which a key for use in encrypting data and a key for use in decrypting the data are different, and it is very difficult to use one key to calculate the other key. According to this public key cryptosystem, information encrypted by using one key can be decrypted only by using the other key.

The encryption key is called the "public key", and is open to the public so as to be used by anybody. The decryption key is called the "secret key", and is managed by a possessor so as not to leak to others. Accordingly, by using a public key to perform encryption, an arbitrary sender can transmit a code that can be decrypted only by a receiver who possesses a secret key.

When the public key is P_{K}, and the secret key is S_{K}, encryption of data M by using the public key P_{K} is represented by C = E(P_{K}, M), and decryption of the code C by using the secret key S_{K} is represented by M = D(S_{K}, C). An important property is that, by keeping the secret key S_{K} secret, if the public key Pₖ or the code C is known, the original plaintext M cannot be obtained.

The "RSA (Rivest Shamir Adleman)" cryptosystem, an elliptic curve cryptosystem, etc., are known as public key cryptosystem algorithms.

### Electronic Signature

An electronic signature is a function corresponding to a seal or sign in data communication. It is used for purposes such as a guarantee (prevention of forgery) that received information has duly been sent from a sender, and prevention (prevention of falsification) of a receiver from rewriting the content of received information so that the receiver can insist that the content is as sent.

For example, by applying the above public key cryptosystem algorithm, the electronic signature is realized.

Here, the public key cryptosystem syntax used in the above is used for description, with the case of RSA signatures taken into consideration. When data M exists, the creator of M uses his or her secret key S_{K} to calculate the electronic signature SG(M) = D(Sₖ, h(M)), where h() represents a unidirectional function and has a property in which it is very difficult to know (or analogize) an input value from an output value. Unidirectional functions include those called "MD5 (message digest algorithm 5)" and "SHA-1 (secure hash algorithm 1)".

When the data M is sent, a set of the data M and an electronic signature, represented by (M, SG(M)), is sent. By confirming whether h(M) = E (P_{K}, SG(M)) is satisfied, a receiver can confirm that M has not been falsified and the electronic signature SG(M) has been added by the owner of the secret key S_{K}. In other words, a message creator uses his or her secret key to encrypt a message, whereby a receiver of the encrypted message can decrypt the encrypted message only by using the creator's public key. Thus, the message, that is, the signature, cannot be forged or falsified. This procedure is hereinafter referred to as "signature confirmation".

Electronic signatures include an RSA signature, an ElGamal signature, and an elliptic ElGamal signature. To avoid confusion with electronic signatures, a secret key S_{K} for use in creating a signature is called a "signature creation key", and a public key P_{K} for use in signature verification is called a "signature verification key". The case of describing the signature creation key or the signature verification key includes information for specifying a unidirectional function for use in the signature.

### Challenge & Response Authentication

This is a technique that implements authentication based on a one-time number (such as a time stamp and a random number) called a challenge code.

By applying the public key cryptosystem algorithm, the challenge&response authentication can be realized. By using the public key P_{K}, possession of the secret key S_{K} can be confirmed without knowing the secret key itself. For example, a verifying side generates a random number r, calculates the value r' = E(P_{K}, r), and sends the value to another party. In response thereto, the other party calculates the original random number r = D(S_{K}, r'), and sends back the random number to a verifying side, whereby the verifying side can confirm possession of S_{K} by the other party.

Alternatively, the random number r is sent form the verifying side to the other party, and the other party recalculates and sends back the value r" = D(S_{K}, h(r)). In response thereto, h(r) = E(P_{K}, r") holds in the verifying side, it is confirmed that the other party possesses the secret key S_{K}.

Similarly, in the electronic signature technique, by using the signature verification key P_{K}, it can be confirmed that the other party possesses the signature creation key S_{K}, without knowing the signature creation key itself. In other words, the verifying side generates and sends the random number r to the other party. In response, the other party calculates and sends back the value SG(r) = D(S_{K}, h(r)). When h(r) = E(P_{K}, SG(r)) holds in the verifying side, it is confirmed that the other party possesses the signature creation key S_{K}.

In the challenge&response authentication, the existence of a particular secret key or signature creation key can be confirmed by using a corresponding public key or signature verification key, without knowing the secret key or signature creation key itself.

### Certificate

In order to authenticate a particular other party (or to inform only a particular other party of information, or to confirm a document created by a particular other party), it is important to have a correct understanding of a public key corresponding to a secret key possessed by the other party, or a signature verification key corresponding to a signature creation key. However, when there are many other parties, it is difficult to have a full understanding. Accordingly, a method has been proposed in which, by understanding only one signature verification key, another public key or signature verification key is correctly understood based on the one signature verification key in a chain manner (ITU-T, X.509 Recommendation).

A possessor of a signature creation key corresponding to only one signature verification key to be understood is commonly called a "Certification Authority (CA)". The CA is a third party organization that can prove that the public key duly belongs to the possessor himself or herself, and it is assumed that the CA is in a fair and neutral position and is absolutely reliable. The CA issues a certificate encrypted by using a CA's own secret key. In other words, the certificate cannot be freely forged by others because it bears an electronic signature.

A set of a signature verification key and signature creation key of the C_{A} is represented by (P_{CA}, S_{CA}), and it is assumed that the signature verification key P_{CA} has been opened and has correctly been posted to devices constituting the system. Also, it is assumed that the signature creation key S_{CA} can be used only by a ticket system management center. Regarding another public key or signature verification key Pₙ, the certificate (Infoₙ, Pₙ, SGₙ) is issued in which the signature SGₙ = (S_{CA'} h(Infoₙ, Pₙ) ) , created using the signature creation key S_{CA} by the CA, is added to a set of information Infoₙ linking to the possessor of the public key or signature verification key and Pₙ. In this manner, the CA guarantees a relationship between the possessor specified by Infoₙ and Pₙ.

### Certificate Verification

When the certificate is used, the possessor of the secret key or signature creation key Sₙ first shows the certificate (Infoₙ, Pₙ, SGₙ) to a signature verifying side. The verifying side verifies the validity of the certificate by using the CA's public key P_{CA} to confirm the signature of the certificate (i.e., by calculating the value h(Infoₙ, Pₙ) = E(P_{CA}, SGₙ) ) . As a result, linking to another party that (has the secret key Sₙ corresponding to the public key Pₙ, or has the signature creation key Sₙ corresponding to the signature verification key Pₙ) can authenticate the content represented by Infoₙ by using Pₙ can be confirmed.

For example, when Infoₙ is a person's name, the person's name of another party authenticable by Pₙ is indicated. The certificate also includes, in general, a cryptosystem algorithm and information of the type of a unidirectional function in use. When a distinction concerning the certificate is required in the following description, one concerning a verification key for an electronic signature is called a "signature certificate", and one concerning a public key for a public key cryptosystem is called a "key certificate". In addition, even if there is no content to be conveyed by the certificate information Infoₙ, a certificate verification algorithm may be used for the purpose of confirming that another party authenticable by Pₙ is registered in the CA.

The gist of the present invention does not depend on a particular cryptosystem algorithm. In the following description, only general properties of the cryptosystem algorithm are used for the present invention. Accordingly, in the description, only cryptosystem types (a common key cryptosystem, a public key cryptosystem, electronic signatures) are written.

The present invention relates to a system in which content can be distributed by using a hardware mechanism so as not to be reproduced. According to the present invention, when the hardware of a content holding apparatus in a system such as an IC card is improperly analyzed or altered, and content whose uniqueness should originally be maintained is reproduced, misuse or no misuse of the content holding apparatus can be detected from a plurality of distribution paths concerning the same content. According to the present invention, by using a transfer history distributed together with the content, it can be identified which content holding apparatus has performed misuse.

Regarding the present invention, a system, content, an apparatus, and content transfer to which the present invention is applied are first described. Next, regarding the transfer history distributed together with the content, its data structure and content transfer associated with the transfer history are described. Next, after describing the assumption required for detecting misuse, a method for checking the content holding apparatus for misuse, and a method for identifying, by using the transfer history, which content holding apparatus has performed misuse are described. After that, after proving that the present invention succeeds in identifying the misused apparatus, in order to prevent the anonymity of content distribution from being lost by finally collecting content distribution information from the transfer history, a method for encrypting the transfer history is described.

### 1. System to which the Present Invention Is Applied

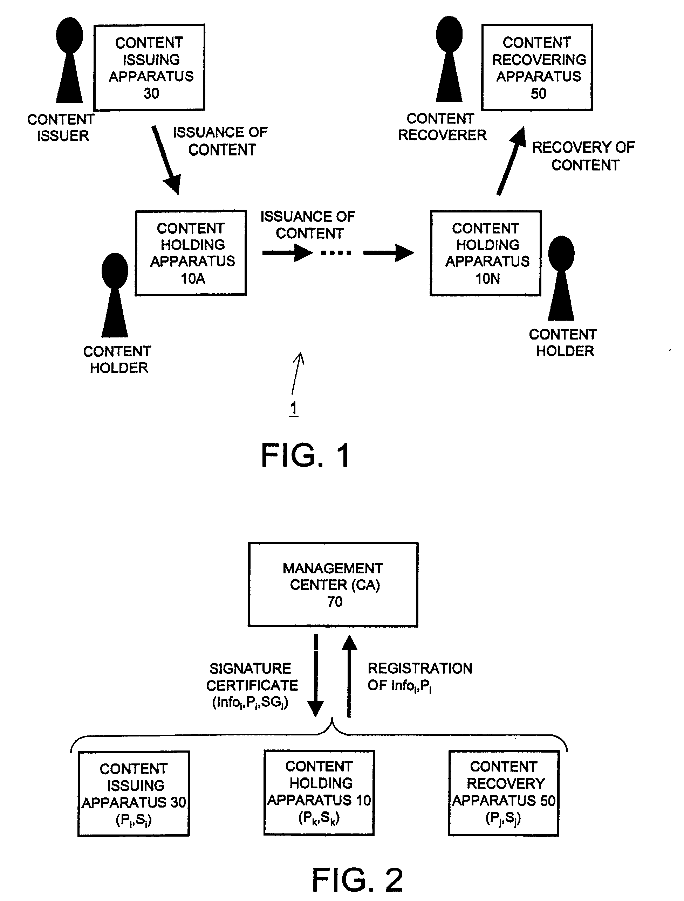

Fig. 1 shows a schematic configuration of a system 1 according to an embodiment of the present invention which holds digital information, that is, content so as not to be reproduced. This system consists of three types of apparatuses, a content holding apparatus 10, a content issuing apparatus 30, and a content recovering apparatus 50. Content is issued by the content issuing apparatus 30, is exchanged by a plurality of holding apparatuses 10A,..., 10N, and is finally recovered by the content recovering apparatus 50.

For example, the content issuing apparatus 30 corresponds to a ticketing apparatus. The content holding apparatus 10 corresponds to an apparatus, such as an IC card, carried by a consumer who purchases a ticket. In the above figure, a linear arrangement of the content holding apparatuses 10A,..., 10N indicates that the content is sequentially transferred among the content holding apparatuses 10A,..., that is, the distribution of the content. When one content holding apparatus has successfully transferred content to another content holding apparatus, the content is erased in the original content holding apparatus.

Also, the content recovering apparatus 50 corresponds to an apparatus for recovering tickets, such as a ticket gate. Although all the items of content are not always recovered, it is assumed that major part of items, such as event tickets, are recovered. When the content is in the form of an electronic ticket, a unique number representing the uniqueness of the content is assigned to the content, and an expiration date is set therein.

In this embodiment, a management center (CA) 70 for issuing an electronic signature certificate is provided for the apparatuses belonging to the above same system 1, that is, the content holding apparatuses 10, the content issuing apparatus 30, and the content recovering apparatus 50. The state is shown in Fig. 2.

Each of the content issuing apparatus 30, the content holding apparatus 10, and the content recovering apparatus 50 has a unique public key Pᵢ and secret key Sᵢ. By registering the public key Pᵢ and a device's unique number HIDᵢ in the management center CA 70, it is controlled to issue the signature certificate (Infoᵢ, Pᵢ, SGᵢ) including Pᵢ and HIDᵢ.

Here, the signature certificate (Infoᵢ, Pᵢ, SGᵢ) includes the unique number HIDᵢ of a corresponding apparatus. The correspondence between the possessor of each of the apparatuses 10, 30, 50 in connection with content distribution, and HIDᵢ is understood only by the management center CA 70. In the case of a signature certificate of the content issuer, information (e.g., a promoter's name in the case of a ticket) about whether or not the certificate has been issued by the content issuer is included as part of Infoᵢ. Each of the apparatuses 10, 30, and 50 holds the public key Pᵢ, the secret key Sᵢ, and the signature certificate (Infoᵢ, Pᵢ, SGᵢ).

Since the correspondence between the possessor of each of the apparatuses 10, 30, 50 in connection with content distribution, and HIDᵢ is understood only by the management center CA 70, when misuse in particular HIDᵢ is found, the management center CA 70 can accuse the possessor of an apparatus in connection with the misuse. On the other hand, even if a transfer history (described later) attached to each item of content indicates that the content was held by a content holding apparatus 10 corresponding to HIDᵢ in the past, an ordinary user cannot specifically know who held the content. This protects the anonymity of content distribution. This point is further mentioned later.

In the following, for convenience of description, HID_{ISSUER} is assigned to the content issuing apparatus 30, and HID_{DEPOSIT} is assigned to the content recovering apparatus 50. Also, the signatures of a content issuer, a content recoverer, and a content holder mean signatures created by the content holding apparatus 10, the content issuing apparatus 30, and the content recovering apparatus 50, respectively. The content recoverer is a content issuer or an agent therefor.

### 2. Content to which the Present Invention Is Applied

In this embodiment, in a system that uses a hardware mechanism to hold content so as not to be reproduced, when the hardware mechanism is improperly analyzed or altered and the content is reproduced, the fact is later detected and a misused segment of the hardware can be specified.

Misuse that this embodiment handles is only reproduction of content, and does not treat alteration of content, etc., other than reproduction. Accordingly, this embodiment is effective in a case in which misuse enabled by analyzing or altering hardware is only reproduction of content, or in which only reproduction of content is important in damage or influence.

In addition, when treated content is normally distributed, it is assumed that the content has uniqueness. In other words, if identical content exists at this time, improper reproduction of content has been performed by analyzing or altering hardware.

Accordingly, it is assumed that each content item bear a unique number TID so as not to be falsified. Whenever a content item is delivered between apparatuses, the content item can be checked for falsification, including the unique number TID of content. This is hereinafter referred to as "content identification".

Regarding a case in which content can be identified, for example, a content configuration is possible in which content bears a unique number TID and an electronic signature.

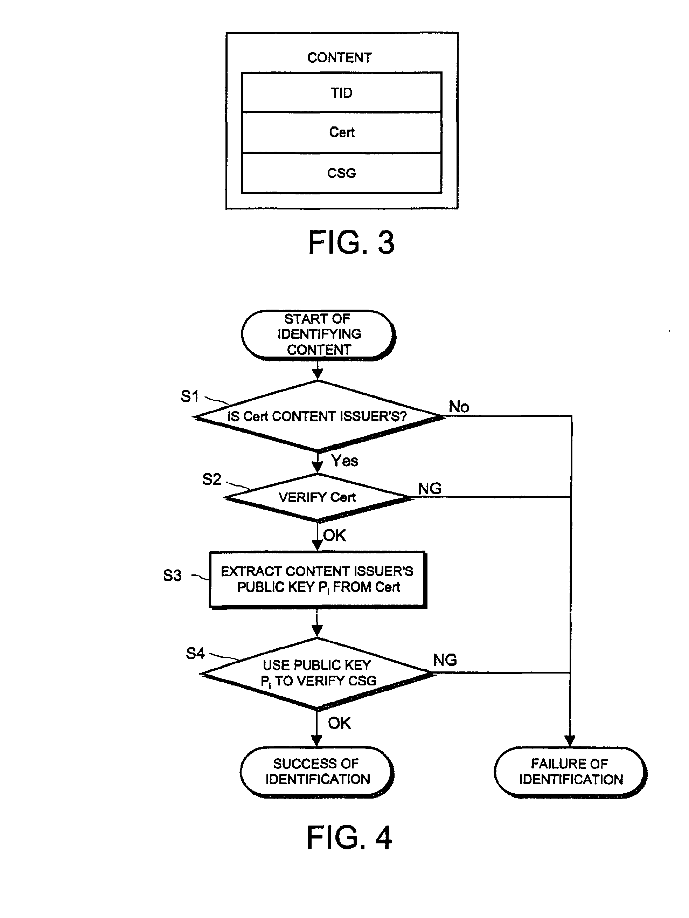

Fig. 3 shows an example of a content configuration. In the above figure, content includes a number TID for specifying the content, a signature certificate Cert of a content issuer, and an electronic signature CSG. The signature certificate Cert of the content issuer is issued by the management center CA 70, and includes (Infoᵢ, Pᵢ, SGᵢ). The electronic signature CSG of content is also a content issuer's electronic signature for the entirety (where the CSG portion is zeroes) of the content. When a combination of zero-valued bits in the content body, the TID, the Cert, and the CSG portion is represented by M, the electronic signature CSG (= SGᵢ(M)) of the content issuer is represented by D(Sᵢ, h(M)). By the signature certificate Cert of the content issuer, a key for verifying the electronic signature CSG is obtained.

In this case, no falsification of content can be recognized by the process shown in Fig. 4 in a flowchart form. A process for identifying content is described below in accordance with the flowchart.

First, it is confirmed whether or not the signature certificate Cert is a content issuer's signature certificate (step S1).

Next, by using the public key P_{CA} of the management center CA 70, the signature certificate Cert is verified (step S2). The verification of the signature certificate Cert is performed by calculating the value h(Infoᵢ, Pᵢ) = E(P_{CA}, SGᵢ) .

After that, the content issuer's public key Pᵢ is extracted from the signature certificate Cert (step S3), and the public key Pᵢ is used to verify the electronic signature CSG (step S4). The verification of the electronic signature CSG is performed by calculating the value h(M) = E(Pᵢ, CSG).

In the example shown in Fig. 3 and Fig. 4, the content is protected so as not be reproduced by the hardware mechanism in each content holding apparatus 10, which is sequentially shifted. Also processing for content identification is performed by hardware having resistance against an improper analysis. By identifying content whenever content is transferred, only content without falsification can be distributed.

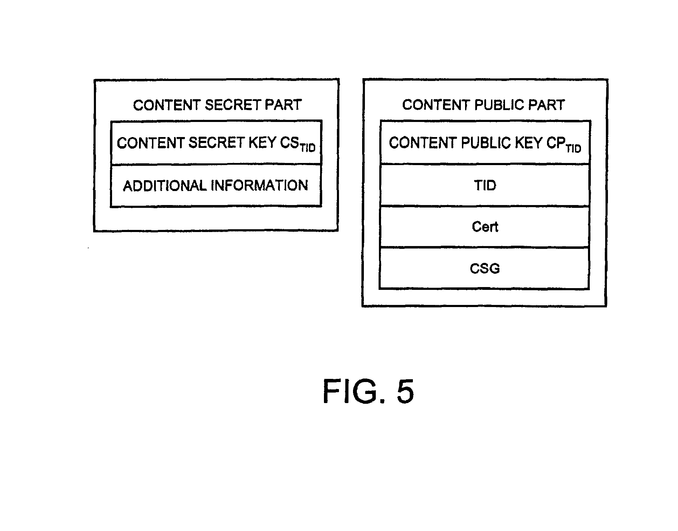

Also, Fig. 5 shows another example of a content configuration in which content can be identified. In the example shown in the above figure, each content item is formed by a set of a content secret part which is protected so that reproduction or falsification is not performed, and a corresponding content public part.

The content secret part consists of a public-key-cryptosystem secret key CS_{TID} which differs for each content item, and additional information, and is distributed with the content public part, which includes a corresponding public key CP_{TID}. The content secret part is kept in an externally inaccessible state in a predetermined content holding apparatus 10 such as an IC card.

Also, the content public part includes the public key CP_{TID}, a number TID for specifying content, a signature certificate Cert of a content issuer, and an electronic signature CSG. The signature certificate Cert of the content issuer is issued by the management center CA 70, and is formed by (Infoᵢ, Pᵢ, SGᵢ). The CSG is a content issuer's electronic signature of the entirety of the content public part (where the CSG portion is zeroes). When a combination of zero-valued bits in the content body, the TID, the Cert, and the CSG portion is represented by M, the electronic signature CSG (= SGᵢ(M)) of the content issuer is represented by D(Sᵢ, h(M)). By the signature certificate Cert of the content issuer, a key for verifying the CSG is obtained. The content public part is put in a state accessible from an external apparatus, for example, outside an IC card.

A content configuration composed of a secret part and a public part, as shown in Fig. 5, is also disclosed in the Specification of Japanese Patent Application No. 2000-378261 ("INFORMATION RECORDING MEDIUM, INFORMATION PROCESSING APPARATUS AND INFORMATION PROCESSING METHOD, PROGRAM STORAGE MEDIUM, AND INFORMATION PROCESSING SYSTEM"), which has already been assigned to the present Applicant.

It is difficult in cryptocipher to falsify a secret key CS_{TID} corresponding to a content public part including a different public key CP_{TID}. Also, a content issuer's electronic signature CSG, included in a content public part, makes it difficult to create a new content public part including an arbitrary public key. Consequently, misuse enabled by analyzing or falsifying hardware is alteration of the additional information, or reproduction of the content secret part of held content. Since the additional information functions as a pair of scissors for a ticket, what is possible by altering the additional information is illegal re-use of the ticket.

Since the object of the present invention is to prevent the distribution of improper content caused by reproduction, misuse based on alteration of additional information is not treated in this Specification. From the foregoing, also the case of "INFORMATION RECORDING MEDIUM, INFORMATION PROCESSING APPARATUS AND INFORMATION PROCESSING METHOD, PROGRAM STORAGE MEDIUM, AND INFORMATION PROCESSING SYSTE" disclosed in the Specification of Japanese Patent Application No. 2000-378261 satisfies applicable conditions of the present invention.

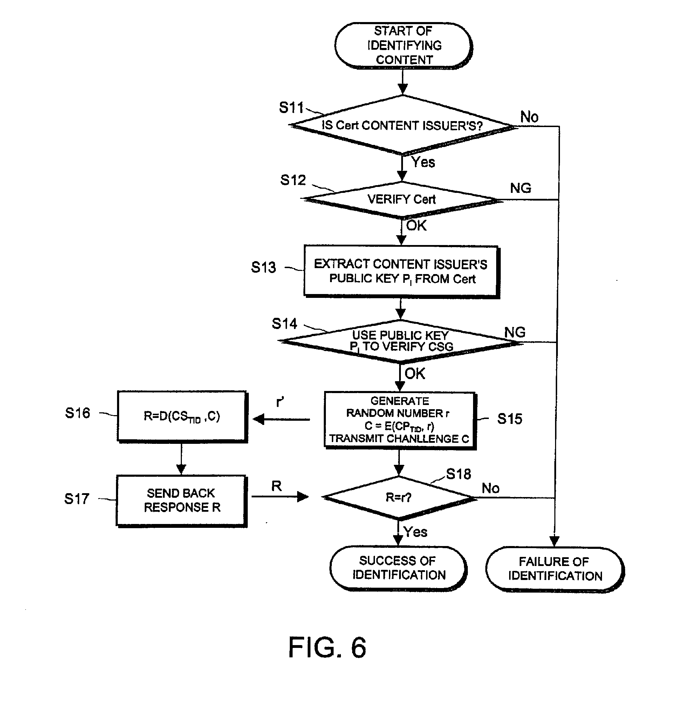

No falsification of the content shown in Fig. 5 can be confirmed by the process shown in Fig. 6 in a flowchart form. A content identifying process is described below in accordance with this flowchart.

First, the content public part is confirmed. In other words, it is confirmed whether or not the signature certificate Cert included in the content public part is a content issuer's signature certificate (step S11).

Next, by using the public key P_{CA} of the management center CA 70, the signature certificate Cert is verified (step S12). The verification of the signature certificate Cert is performed by calculating the value h(Infoᵢ, Pᵢ) = E(P_{CA}, SGᵢ) .

After that, the content issuer's public key Pᵢ is extracted from the signature certificate Cert (step S13), and the public key Pᵢ is used to verify the electronic signature CSG (step S14). The verification of the electronic signature CSG is performed by calculating the value h(M) = E(Pᵢ, CSG) .

In steps S11 to S14, the validity of the content public part is confirmed. Next, in step S15 or thereafter, the validity of the content secret part is confirmed. In this embodiment, the public key CP_{TID} is extracted from the confirmed content public part, and by using the extracted key to confirm whether or not a corresponding content secret part (secret key CS_{TID}) exists, challenge response authentication is performed to confirm the validity of the content secret part.

In the challenge response authentication, the content public part generates random number r, and transmits, to the content secret part, data C obtained by using the public key CP_{TID} to encrypt the random number r (step S15).

The content secret part uses its own content secret key CS_{TID} to decrypt encrypted data C (step S16), and sends back the decrypted result R to the content public part (step S17).

The content public part performs authentication by comparing the value R sent back from the content secret part and the random number r (step S18).

In the example shown in Fig. 5 and Fig. 6, in order that the content may not be reproduced, the content holding apparatus 10 uses a hardware mechanism to protect at least only the content secret part, and performs, on hardware having resistance against an improper analysis, a process in the content identification which uses at least the content secret part to calculate a response value. Whenever content transfer is performed between the content holding apparatuses, by performing the above content identification, it can be guaranteed that only content without falsification is distributed.

In this embodiment, each content item has a predetermined period of time, it is assumed that most of the content items be recovered after the predetermined period of time. The term "recover" in this context means that content items are collected and returned to the content issuer, or an agent therefor, that is, a content recoverer. The recovering includes a method based on a content expiration date, for example, a method which is valid on a particular date and time and recovering is performed on the date and time, as in a case in which content is in an electronic ticket form. The content recovering apparatus 50, which corresponds to, for example, a ticket gate in a concert place, recovers content items.

### 3. Content Holding Apparatus

Here, for brevity of the following description, an example of an IC card in which a content holding apparatus has endurance in hardware as a whole is described as the content holding apparatus 10 to which the present invention is applied. An IC card is designed and produced so that its analysis is difficult. Normally, information held in the card cannot be read.

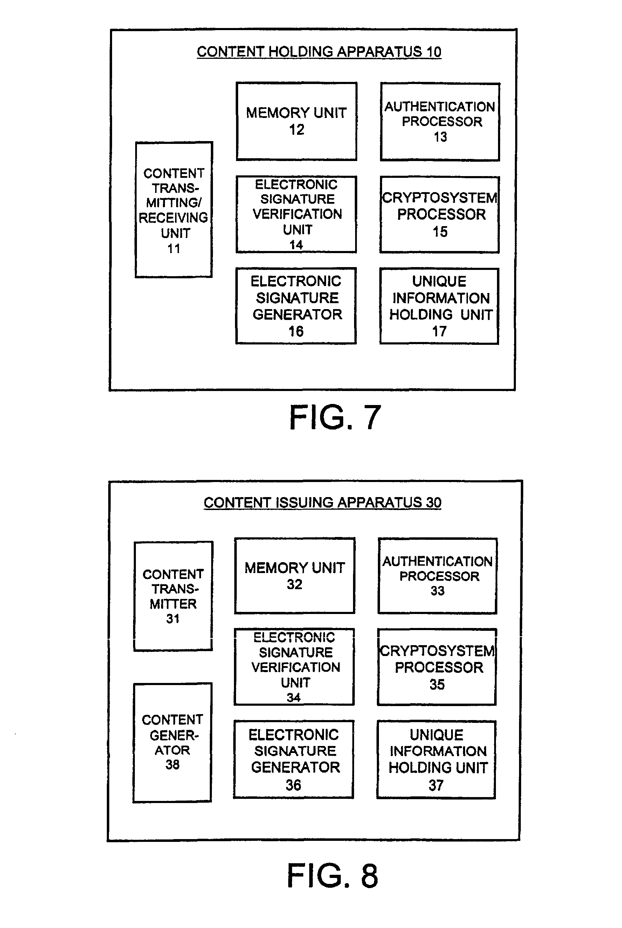

Fig. 7 shows a schematic configuration of the content holding apparatus 10 to which the present invention is applied. As shown in the above figure, the content holding apparatus 10 includes a content transmitting/receiving unit 11, a memory unit 12, an authentication processor 13, an electronic signature verification unit 14, a cryptosystem processor 15, an electronic signature generator 16, and a unique information holding unit 17.

The content transmitting/receiving unit 11 performs inter-apparatus data communication for transferring or receiving content with another content holding apparatus 10, the content issuing apparatus 30, and the content recovering apparatus 50. Exchange of content is performed after a predetermined authentication procedure. Its details are described later.

The memory unit 12 holds content such as an electronic ticket, working data for use in inter-apparatus authentication processing, such as random numbers and a transfer history (described later), etc.

The cryptosystem processor 15 performs encryption and decryption processing using the common key cryptosystem algorithm (as described above).

The authentication processor 13 has a function of confirming whether or not each content-exchanging party (another content holding apparatus 10, the content issuing apparatus 30, the content recovering apparatus 50, etc.) duly belongs to the system. When the authentication is performed, an electronic signature generated by each apparatus, and a signature certificate by the management center (CA) 70 can be used.

The unique information holding unit 17 holds unique information for use in authentication processing, such as a signature certificate (Infoₖ, Pₖ, SGₖ) of a content holding apparatus 10, a secret key S_{K} corresponding to the public key Pₖ included in the certificate, a public key P_{CA} of the management center CA 70, and a unique number HIDₖ of the content holding apparatus 10.

The electronic signature generator 16 has a function of generating its own electronic signature by using its own secret key S_{K}. When data M exists, the electronic signature generator 16 uses its own secret key S_{K} to calculate the electronic signature SG(M) = D(S_{K}, h(M)). When data M is sent, it is sent in the form of a set with the electronic signature, that is, the form (M, SG(M)) (as described above).

Also, the electronic signature verification unit 14 has a function of verifying the electronic signatures of another content holding apparatus 10, the content issuing apparatus 30, the content recovering apparatus 50, and the management center CA 70. By verifying the electronic signature SG(M), that is, confirming whether or not h(M) = E(Pₖ, SG(M)), the electronic signature verification unit 14 confirms that data M has not been falsified, and that the electronic signature SG(M) has been added by the possessor of the secret key S_{K} (as described above).

Obviously, for realizing the present invention, the content holding apparatus 10 is not limited to an IC card. For example, the information distribution system disclosed in Japanese Unexamined Patent Application Publication No. 11-238850 and the electronic ticket system disclosed in the Specification of Japanese Patent Application No. 2000-378261 may be used as the content holding apparatus 10 according to this embodiment.

### 4. Content Issuing Apparatus

The "content" in this embodiment means an electronic ticket, for example, a transportation ticket, a pass check, a member ship card, a permission slip, a service coupon, or the like. Accordingly, the content issuing apparatus 30 according to this embodiment initially generates content used as an electronic ticket.

The content issuing apparatus 30 corresponds to a content issuer, and has a function of receiving, as an input, information to be held as content, temporarily holding the information, and transferring the content to the content holding apparatus 10. The content issuing apparatus 30 has no function of receiving or recovering content.

Fig. 8 shows a schematic configuration of a content issuing apparatus 30 to which the present invention is applied. As shown in the above figure, the content issuing apparatus 30 includes a content transmitting/receiving unit 31, a memory unit 32, an authentication processor 33, an electronic signature verification unit 34, a cryptosystem processor 35, an electronic signature generator 36, a unique information holding unit 37, and a content generator 38.

The content generator 38 receives, as an input, information to be held as content, and generates content corresponding to an electronic ticket or the like. Information held with the content includes, for example, content-unique identification information TID, an electronic signature CSG by a content issuer, a signature certificate of the content issuer which is acquired from the management center CA 70. The generated content has, for example, the data structure shown in Fig. 3 or Fig. 5.

The content transmitting/receiving unit 31 performs content-transferring inter-apparatus data communication with the content holding apparatus 10. The content transfer in this context corresponds to the sale of content corresponding to an electronic ticket or the like.

The memory unit 32 holds content such as an electronic ticket, working data for use in inter-apparatus authentication processing, such as random numbers and a transfer history (described later), etc.

The cryptosystem processor 35 performs encryption and decryption processing using the common key cryptosystem algorithm (as described above).

The authentication processor 33 has a function of confirming whether or not the content holding apparatus 10 as a content-exchanging party duly belongs to the system. When the authentication is performed, an electronic signature generated by each apparatus, and a signature certificate by the management center (CA) 70 can be used.

The unique information holding unit 37 holds unique information for use in authentication processing, such as a signature certificate (Infoᵢ, Pᵢ, SGᵢ) of a content issuing apparatus 30, a secret key Sᵢ corresponding to the public key Pᵢ included in the certificate, a public key P_{CA} of the management center CA 70, and a unique number HIDᵢ of the content holding apparatus.

The electronic signature generator 36 a function of generating its own electronic signature by using its own secret key Sᵢ. When data M exists, the electronic signature generator 36 uses its own secret key Sᵢ to calculate the electronic signature SG(M) = D(Sᵢ, h(M)). When data M is sent, it is sent in the form of a set with the electronic signature, that is, the form (M, SG(M)) (as described above).

Also, the electronic signature verification unit 34 has a function of verifying the electronic signatures of the content holding apparatus 10 and the management center CA 70. By confirming whether or not h(M) = E(Pₖ, SG(M)) is satisfied, the electronic signature verification unit 14 confirms that data M has not been falsified, and that the electronic signature SG(M) has been added by the possessor of the secret key S_{K} (as described above).

### 5. Content Recovering Apparatus

The recovery of content in this embodiment means recovery, in a predetermined ticket gate, of electronic tickets concerning, for example, transportation tickets, pass checks, membership cards, permission slips, service coupons, etc. In this embodiment, as shown in Fig. 1, the content recovering apparatus 50 is assumed as an apparatus for finally recovering content items exchanged among the content holding apparatuses 10.

The content recovering apparatus 50 corresponds to a ticket gate, and has a function of displaying and checking received content. The content recovering apparatus 50 also performs later described misuse detection and identification on the recovered content. Although the content recovering apparatus 50 can receive content, it has no function of transferring content to another apparatus. It is possessed only by the content recoverer.

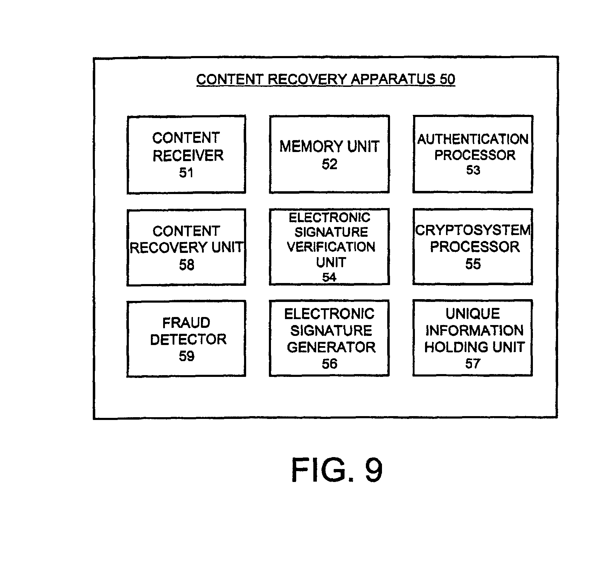

Fig. 9 shows a schematic configuration of a content recovering apparatus 50 to which the present invention may be applied. As shown in the above figure, the content recovering apparatus 50 includes a content receiver 51, a memory unit 52, an authentication processor 53, an electronic signature verification unit 54, a cryptosystem processor 55, an electronic signature generator 56, a unique information holding unit 57, a content recoverer 58, and a fraud detector 59.

The content receiver 51 performs inter-apparatus data communication for receiving content from the content holding apparatus 10. The receiving content in this context corresponds to recovering content corresponding to an electronic ticket. The recovered content is stored in the content recoverer 58.

The memory unit 52 holds, content such as electronic tickets, working data for use in inter-apparatus authentication processing, such as random numbers and transfer histories (described later), etc.

The cryptosystem processor 55 performs encryption and decryption processing using the common key cryptosystem algorithm (as described above).

The authentication processor 53 has a function of confirming whether or not the content holding apparatus 10, which is another party receiving the content, duly belongs to the system. The authentication processing uses electronic signatures generated by apparatuses, a signature certificate by the management center (CA) 70.

The unique information holding unit 57 holds unique information for use in the authentication processing, such as a signature certificate (Infoⱼ, Pⱼ, SGⱼ) of the content issuing apparatus 30, a secret key Sⱼ corresponding to a public key Pⱼ included in the certificate, the public key P_{CA} of the management center CA 70, and a unique number HIDⱼ of the content recovering apparatus 50.

The electronic signature generator 56 has a function of using its own secret key Sⱼ to generate its own electronic signature. When data M exists, the electronic signature generator 56 uses its own secret key Sⱼ to calculate the electronic signature SG(M) = D(Sⱼ, h(M)) of data M. Also, data M is sent, it is sent in the form of a set with the electronic signature, that is, the form (M, SG(M)) (as described above).

The electronic signature verification unit 54 also has a function of verifying electronic signatures of the content holding apparatus 10 and the management center CA 70. By verifying the electronic signature SG(M) concerning data M, that is, confirming whether or not h(M) = E(Pₖ, SG(M)) is satisfied, the electronic signature verification unit 54 confirms that M has not been falsified and that the electronic signature SG(M) has been added by the possessor of the secret key S_{K} (as described above).

The fraud detector 59 has a function of receiving from the content holding apparatus 10 in the content receiver 51, and verifying, by checking the recovered content stored in the content recoverer 58, whether or not misuse has been performed in the process of repeatedly exchanging content among the content holding apparatuses 10. For example, by analyzing a transfer history of content, the fraud detector 59 can detect fraud made in the process of the distribution of the content, and can specify a content holding apparatus in which fraud is made. Details of a misuse detection process are described later.

### 6. Content Transfer Procedure: the Case of No Transfer History

A movement of content among the above content holding apparatus 10, content issuing apparatus 30, and content recovering apparatus 50 is called "transfer". In this embodiment, when content is moved between apparatuses, the content is handled with it encrypted. In addition, to prevent supplying an apparatus other than an apparatus with which communication should not be performed, or receiving content, mutual authentication is performed in a mode connecting to another apparatus.

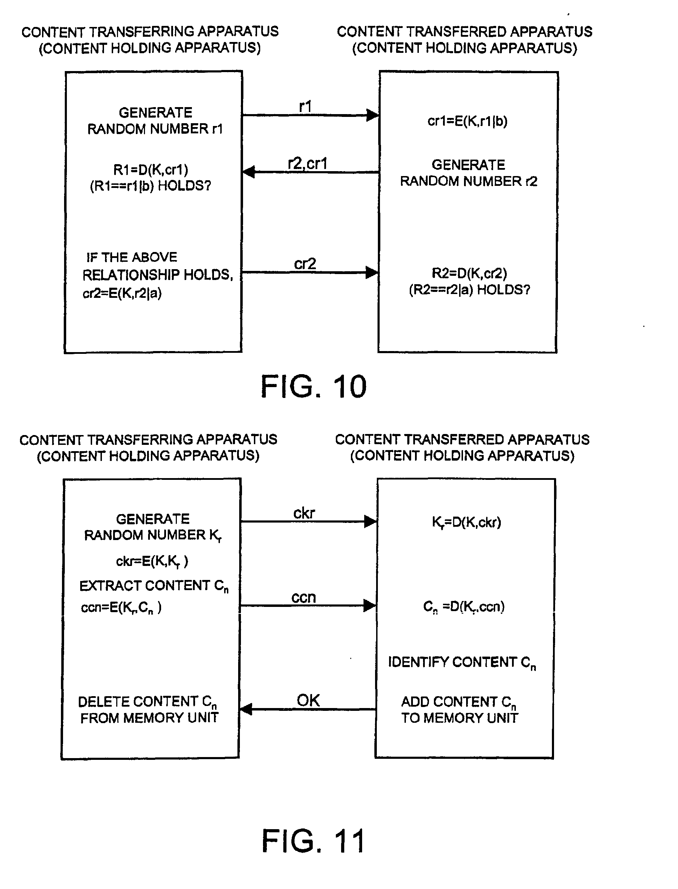

Authentication between the content transferring and receiving sides can be confirmed such that, for example, one belonging to the same system holds the same common key K. Fig. 10 shows a schematic process for an inter-apparatus authentication procedure. In the above figure, a and b are predetermined numeric values for distinguishing between encryption by an authentication-initiating apparatus (a) and encryption by an authenticated apparatus (b). Also, the values are shared by all the content holding apparatuses 10 belonging to the system. In addition, r|a represents a bit combination of values r and a. A content transferring apparatus is a content holding apparatus 10 or a content issuing apparatus 30, and a content-transferred apparatus is another content holding apparatus 10 or the content recovering apparatus 50.

First, the authentication initiating apparatus generates and sends random number r1 to the authenticated apparatus.

In response, in the authenticated apparatus, the received random number r1 and the predetermined value b are combined in bit and encrypted by using a common key K to generate a code cr1 (= E(K, r1|b)). The authenticated apparatus generates a random number r2 and sends back the random number to the initiating apparatus with the code cr1.

In the initiating apparatus, the received code cr1 is decrypted by using a common key to generate plaintext R1 (= D(K, cr1)). After that, by comparing R1 and r1|b, when both match each other, authentication is established in both apparatuses. The initiating apparatus combines, in bit, the received random number r2 with the predetermined value a (a differs from b), uses a common key K to encrypt the obtained value, and transmits the resultant code cr2 (= E(K, r2|a)) to the authenticated apparatus. In the receiving apparatus, the received code cr2 is decrypted by using a common key to generate plaintext R2 (K, cr2). After that, by comparing R2 and r2|a, when both match each other, authentication in the initiating apparatus is established.

One that can pass the authentication as shown in Fig. 10 is limited to an apparatus that possesses the common key K, which is shared in the same system. Accordingly, if content holding apparatuses 10 belonging to the same system, that is, an IC card, share the common key K, they can confirm that each belongs to the same system by experiencing the above authentication. This process is hereinafter referred to as the "authentication procedure" in the following description.

When the above authentication procedure successfully ends in the content transferring and transferred apparatuses, the transferring apparatus forwards content in the memory unit 12 in an encrypted form to the transferred apparatus.

Fig. 11 shows a schematic content forwarding procedure performed between the content transferring and transferred apparatuses after the authentication procedure.

First, the content transferring apparatus generates random number Kᵣ for use as a key for encrypting content. In order to share the content encryption key Kᵣ with the content-transferred apparatus, the transferring apparatus forwards, to the content-transferred apparatus, a code ckr (= E(K, Kᵣ)) obtained by encrypting the encryption key Kᵣ by using the common key K shared in the system. As a result, the encryption key Kᵣ is also shared in the system.

Next, the content transferring apparatus uses the shared key Kᵣ to encrypt content Cₙ to be sent, such as an electronic ticket, and forwards the obtained code ccn to the content-transferred apparatus.

In response, the content-transferred apparatus obtains the original content Cₙ by using the shared key Kᵣ to decrypt the received code ccn. Next, the content-transferred apparatus performs content identification on the content Cₙ.

In a case in which the content has a data structure as shown in Fig. 3, in accordance with the process shown in the flowchart form shown in Fig. 4, the content identification of the content is performed by confirmation of the signature certificate cert, verification of the signature certificate Cert by using the public key P_{CA} of the management center CA 70, and verification of the electronic signature CSG by using the public key Pᵢ of the content issuer which is extracted form the electronic signature Cert (as described above). Alternatively, in a case in which the content has a data structure divided into a secret part and a public part, as shown in Fig. 5, the content identification of the content is performed such that, after confirming the validity of the content public part by confirmation of the signature certificate Cert, verification of the signature certificate Cert by using the public key P_{CA} of the management center CA 70, and verification of the electronic signature CSG by using the public key Pᵢ of the content issuer, the challenge response authentication confirms the validity of the content secret part (as described above).

When succeeding in the content identification, the content-transferred apparatus notifies the content transferring apparatus of content reception. In response, the content transferring apparatus deletes the original content Cₙ stored in the memory unit 12. Also, the content-transferred apparatus additionally stores the content Cₙ in its memory unit 12.

The process for moving content by forwarding content in the memory unit 12 in an encrypted form is hereinafter referred to as "content forwarding" in the following description.

Although data forwarding, such as content transfer, originally requires measures for communication error, this point is not directly relevant to the gist of the present invention. Accordingly, its description is omitted in this Specification.

### 7. Structure of Transfer History

In this embodiment, in order to specify an apparatus in which misuse is performed in the process of repeatedly exchanging content items among a plurality of apparatuses, each content item is provided with a "transfer history" in which a history of exchange among content holding apparatuses is recorded.

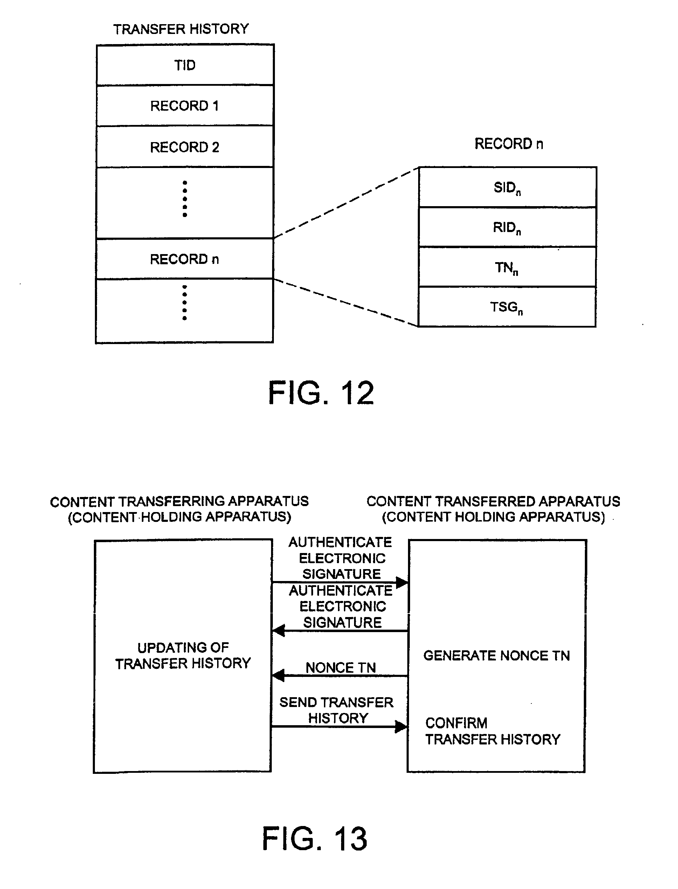

The transfer history is information in which a history of content transfers is recorded. Fig. 12 shows an example of a data structure of the transfer history. The shown transistor consists of TID which is a content's unique number, and records (record 1, record 2,...) to which one record is added whenever a content transferring procedure is performed.

The first record, that is, record 1, indicates a transfer history of performed transfer of content from the content issuing apparatus 30 to the content holding apparatus 10A. Similarly, the n-th record (record n) indicates a transfer history of performed transfer of content from the (n-1)-th content holding apparatus to the n-th content holding apparatus.

The n-th record of the transfer history, that is, record n, includes SIDₙ (sender ID) which is the unique number HID of a content transferring apparatus in content transfer, RIDₙ (receiver ID) which is the unique number HID of a content-transferred apparatus, Nₙ which is a one-time number (nonce) formed by a time or a random number, and TSGₙ which is a digital signature generated by the content transferring apparatus.

TSGₙ is a digital signature for the entirety of a transfer history. Specifically, it is a digital signature for TID and all of record 1 to record n (where the portion of the digital signature TSGₙ of record n is zeroes). When TID and all of record 1 to record n (the portion of TSGₙ is zeroes) are represented by data mₙ, TSGₙ is represented by D(Sₙ, h(Mₙ)) (where Sₙ is a secret key of a content holding apparatus which performs content transfer for the n-th time).

Regarding a transfer history, uniqueness does not need to be maintained, differently from content itself. Accordingly, the transfer history can be held in a user-readable storage area of the content holding apparatus 10, separately from the content. However, when a user carelessly alters the transfer history, transfer history exchange cannot succeed in a content transfer process, which is described later. Thus, it is preferable that the transfer history be held so that such an attempt cannot be easily performed.

### 8. Content Transfer Procedure: the Case of Usinq Transfer History

Since the content transfer procedure in the case of not using a transfer history has already been described, a content transfer procedure in the case of using a transfer history is described here.

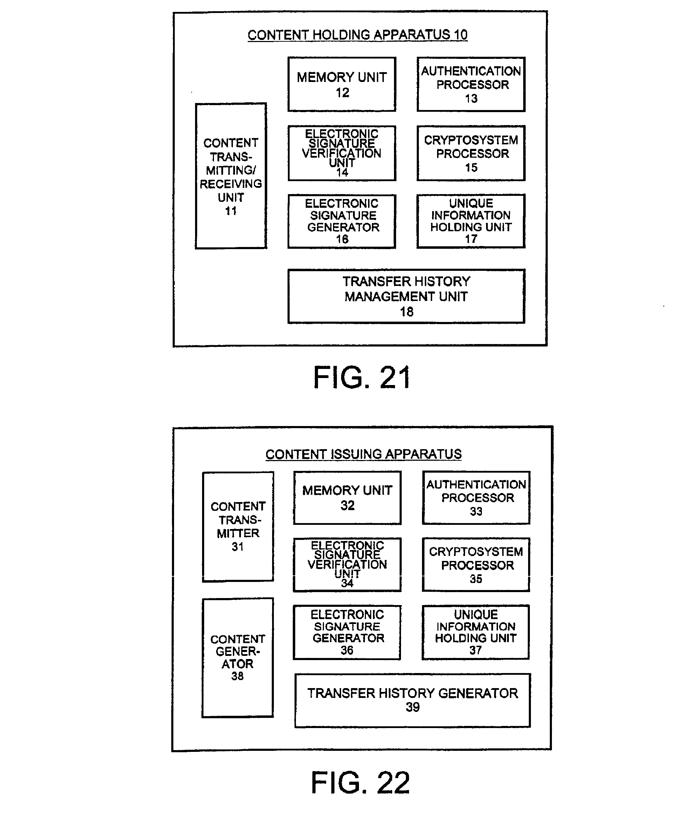

In the case of handling a transfer history in a content exchanging process, the content holding apparatus 10 includes a transfer history management unit 18 for performing transfer history verification and transfer history updating (see Fig. 21). Also, the content issuing apparatus 30 includes a transfer history generator 39 for generating a transfer history in a content transfer mode (see Fig. 22). The fraud detector 59 in the content recovering apparatus 50 has a function of detecting misuse in a content distribution process by analyzing the records of the transfer history.

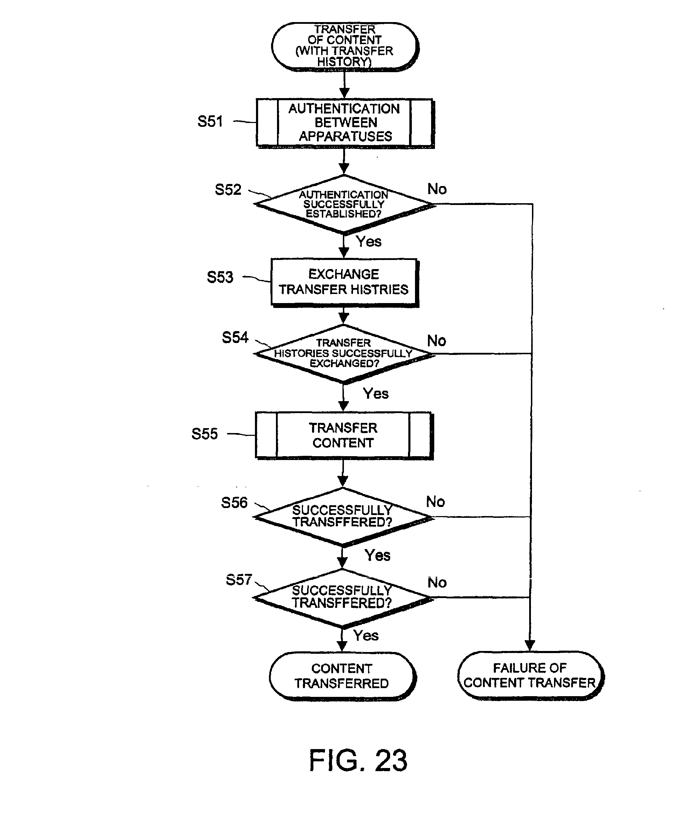

Fig. 23 shows, in a flowchart form, a process for transferring content between content holding apparatuses in the case of additionally using the transfer history. In accordance with the flowchart, the content transfer procedure using the transfer history is described below.

In content movement in the case of additionally using the transfer history, first, an authentication procedure is performed between content holding apparatuses (steps S51 and S52). Since the inter-apparatus authentication procedure has already been described with reference to Fig. 10, its description is omitted here.

When the inter-apparatus authentication procedure succeeds, a transfer history exchange which exchanges transfer histories is next performed (steps S53 and S54). When the following digital signature authentication confirms that a content exchanging apparatus on another party belongs to the same system, for example, when signature certificates are issued only to content holding apparatuses belonging to the same system (i.e., similarly to the case of holding the common key K), transfer history exchange may be performed in place of the authentication procedure. Details of the transfer history exchange procedure are described later.

After the-transfer history exchange succeeds, the above content transfer is performed (steps S55 and S56).

After that, after the content transfer succeeds, by confirming that unique numbers TIDs included in the transferred transfer history and content match each other, the content transfer is completed (step S57).

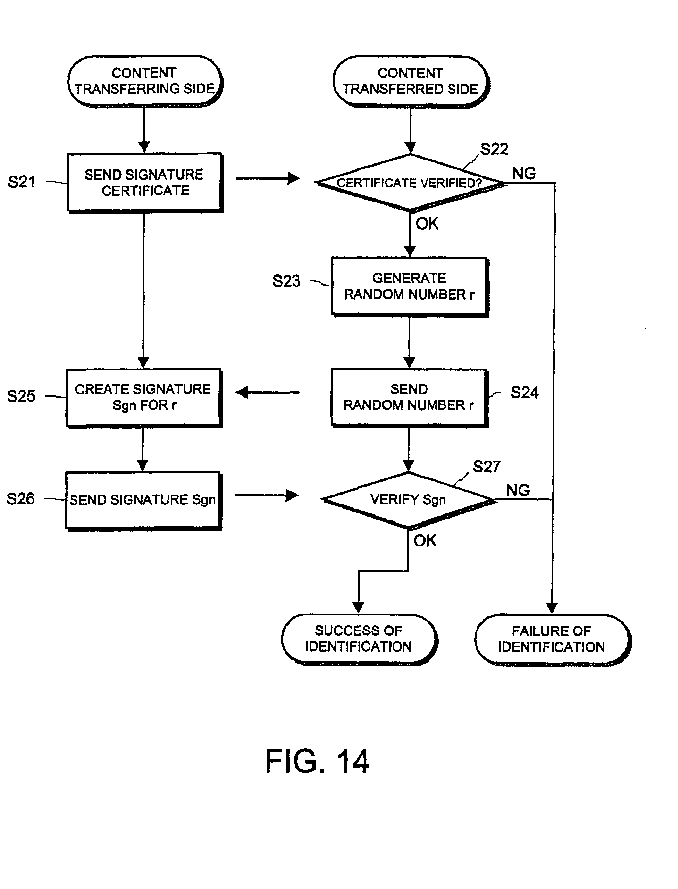

Fig. 13 shows a schematic transfer history exchange procedure, which corresponds to step S53 in the flowchart shown in Fig. 23, performed between the content transferring and transferred apparatuses. Fig. 14 shows, in a flowchart form, a process in the transfer history exchange procedure of digital signature authentication from the content holding apparatus on the content transferring side to the content holding apparatus on the transferred side. (the process of digital signature authentication from the content holding apparatus on the transferring side to the content holding apparatus on the transferred side is similar to that in Fig. 14, and its description is omitted) The transfer history exchange procedure is described with reference to Fig. 13 and Fig. 14.

First, the content transferring holding apparatus send its signature certificate to the content-transferred holding apparatus (step S21). Regarding the signature certificate, a certificate (as described above) may be used in which the signature SGₙ = D(S_{CA}, h(Infoₙ, Pₙ)), generated by the management center CA 70 using its secret key S_{CA}, is added to a set of information linking to the content transferring side, and Pₙ.

In response, the content-transferred holding apparatus performs signature certificate verification (step S22). by using the public key P_{CA} of the management center CA 70 to confirm the signature of the certificate (h(Infoₙ, Pₙ) = E(P_{CA}, SGₙ)), the validity of the certificate can be verified (as described above).

When the certificate is valid, the content-transferred holding apparatus generates random number r (step S23), and sends the random number r to the content transferring holding apparatus (step S24).

The content transferring holding apparatus generates the signature Sgn = D(Sₙ, h(r)) on the received random number r (step S25) and sends back the signature to the corresponding to holding apparatus (step S26).

The content-transferred holding apparatus verifies whether or not the electronic signature Sgn is valid as a signature of the content transferring holding apparatus for its generated random number r (step 527). The validity of the signature can be verified based on h(r) = E(Pₙ, Sgn) by using the public key Pₙ of the content transferring holding apparatus.

Similarly to the above, by performing digital signature authentication from the content-transferred holding apparatus also to the content transferring holding apparatus, both content holding apparatuses can correctly understood each signature verification key and ID. The ID of the content-transferred holding apparatus is used in a record making mode (described later).

Next, the content-transferred holding apparatus generates nonce TNₙ which differs every time (whenever content is transferred) form a random number as a large number of bits and time information, and sends the nonce to the content transferring holding apparatus.

The content transferring holding apparatus updates the transfer history and generates a new record. New record n includes the unique number SIDₙ of the content transferring apparatus in content transfer, the unique number RIDₙ of the content-transferred apparatus, and nonce TNₙ (as described above).

Finally, the content transferring holding apparatus uses its secret key Sₙ to generate electronic signature TSGₙ for the entire transfer history including the new record (where calculation is performed with the portion of TSGₙ in the new record set to zeroes), and adds the electronic signature to the new record (as described above). The updated transfer history is sent to the content-transferred holding apparatus.

In response thereto, the content-transferred holding apparatus confirms the received transfer history. In other words, it confirms that the content transferring holding apparatus's ID understood by the preceding electronic signature verification procedure is included in SIDₙ of the new record and its ID is duly included in RIDₙ, and that nonce TNₙ identical to that previously generated by it is included. Finally, by using the signature verification key Pₙ of the content transferring holding apparatus, it is verified that the signature TSGₙ of the new record is duly a signature of the content transferring holding apparatus which corresponds to the transfer history. The verification of the signature TSGₙ can be performed by h(mₙ) = D(Pₙ, TSGₙ) when TID and all of record 1 to record n (the portion of TSGₙ is zeroes).

When the content-transferred holding apparatus succeeds in confirming the transfer history, the content transferring holding apparatus deletes the original transfer history, the content-transferred holding apparatus stores the received transfer history, and the transfer history exchange ends.

### 9. Misuse Detecting and Specifying

By performing the above-described content transfer procedure (see Fig. 11), each content item is provided with a transfer history (see Fig. 12) containing records of performed transfers by a content issuer (content issuing apparatus 30) to the present content possessor (content holding apparatus 10).

The content items are unique and are simultaneously held only a single content holding apparatus (distinguished by HID). Since each content holding apparatus can be distinguished by the apparatus's unique number HID, a transfer history of particular content distinguishable by unique number TID should be in one type.

However, when it is assumed that an unauthorized analysis of hardware reproduce content, content to which certain TID is assigned is simultaneously held by a plurality of content holding apparatuses. As a result, for the TID in connection with the fraud, a plurality of transfer histories are generated.

Here, a case (when it is impossible to falsify a transfer history) is considered in which, in the case of a complete transfer history, that is, even if an analysis of the content holding apparatus 10 performs unauthorized reproduction of content, a transfer history is duly recorded in the above-described process.

At first, a content issuer issues content so that it is unique. Thus, until its transfer history reaches a misused content holding apparatus, only a single transfer history exists with the unique content. However, records which correspond to transfers from the misused content holding apparatus differ, and form different transfer histories thereafter. In the following, this is hereinafter referred to as transfer history "branching", and a record in which branching occurs is hereinafter referred to as a "branching record". Due to transfer history branching, plural types of transfer histories are generated for content reproduced by misuse.

When content is reproduced by misuse, particular content (i.e., particular TID) is recovered a number of times due to the expiration of a valid period or content recovery by the content recovering apparatus 50. First, from the recovery of a single TID two or more times, implementation of misuse in the process of transferring content is indicated.

In addition, in response to transfer history branching caused by the content reproduction, plural types of transfer histories are recovered. By analyzing the types of transfer histories and searching for a branching record, the sender ID of the record, that is, an SID content holding apparatus, can be specified as a misused content holding apparatus.

The foregoing description is based on the condition that the integrity of a transfer history is maintained. However, the present invention is not bound by the above condition. Even if the transfer history is altered by a content holding apparatus that can perform unauthorized reproduction of content in any manner, a misused content holding apparatus can be similarly specified.

The following describes the case of specifying a misused content holding apparatus, including falsification of a transfer history in fraud. In addition, the following describes that, even if there are content holding apparatuses to be misused and they collude with one another, among the misused content holding apparatuses, at least one apparatus can be specified.

### 10. Assumption of Misuse Identification

In detecting unauthorized falsification of a transfer history and collusion of a plurality of content holding apparatuses, the following two points are assumed. That is:
(1) Misuse enables reproduction of content held by a content holding apparatus possessed by one party or its related party, and generation of a digital signature of the content holding apparatus.
(2) It is only in a period in which a transfer history of content is held in a content holding apparatus of one party that the transfer history can be falsified. In other words, a transfer history held by another party cannot be falsified.

It will be understood by a person skilled in the art that these assumptions are actual conditions for implementing fraud detection based on a content transfer history.

### 11. Misuse Detection and Misuser Identification Procedure

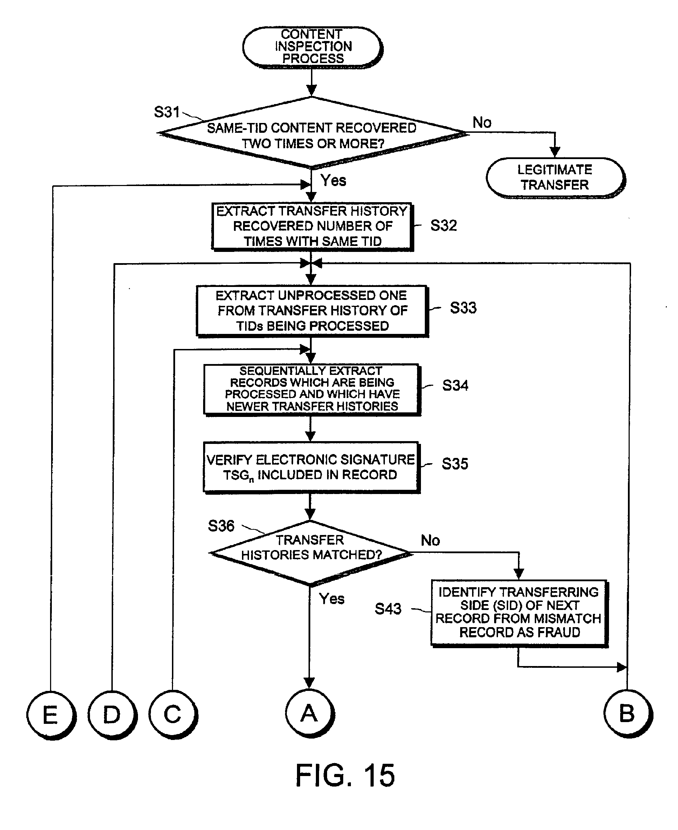

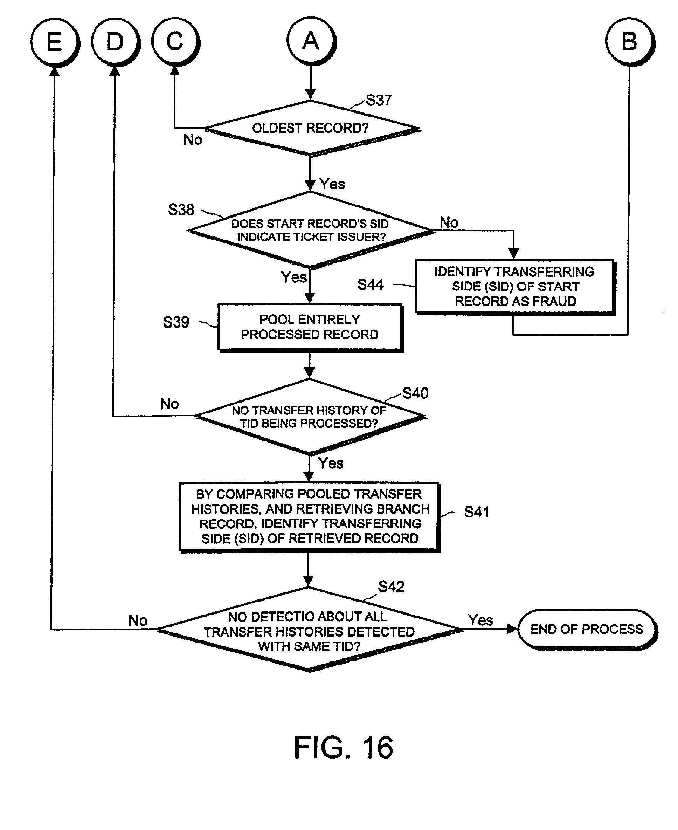

Misuse detection using a content transfer history, and identification of a misused content holding apparatus consists of a four-step process shown below. Also, Fig. 15 and Fig. 16 use a flowchart form to show a process for detecting misuse by using a content transfer history, and identifying a misused content holding apparatus. The process for detecting misuse and identifying a misuser is described below with reference to the flowchart.
(1) It is examined whether or not content having the same unique number TID has been recovered a plural number of times (step S31).
   If all content items having different TIDs have not been recovered only once, misuse has not been performed. Accordingly, the process ends. On the other hand, when content having the same TID has been recovered two or more times, the transfer histories are collected, and processing in step (2) and thereafter is performed for each TID.
(2) Regarding each transfer history corresponding to the same TID, all the included records are followed from new to old one, and an electronic signature TSGₙ is verified (steps S34 to S37).
   When record k having an incorrect electronic signature is found in the procedure, the sender (i.e., an apparatus having received an unverifiable record) of the next record k+1 is regarded as having performed misuse (step S43).
   Regarding a transfer history for which inconsistency cannot be found in step (2), the process proceeds to the next step (3).
(3) Regarding each transfer history having the same transfer history, it is determined whether or not an apparatus (SID) on a content transferring side concerning the start record (i.e., the oldest record) of the transfer history is an issuer (HID_{ISSUER}) of the content or a ticket (step S38) .
   When the apparatus (SID) on the content transferring side concerning the start record is not the ticket issuer (HID_{ISSUER}), the apparatus on the content transferring side corresponds to the number of a misused content holding apparatus (step S44).
   Regarding another transfer history, that is, one in which misuse cannot be identified based on a single transfer history is temporarily pooled (step S39). On that basis, if, as to TIDs being processed, there are other unprocessed transfer histories, the above steps (2) and (3) are executed (step S40).
   If the process has finished for all the transfer histories having the same TID, it proceeds to the next step (4).
(4) When a plurality of transfer histories having the same TID are pooled, the transfer histories are compared with one another, and a branching record in them is searched for. A content holding apparatus (SID) on the content transferring side in the branching record is regarded as having performed misuse (step S41) .

### 12. Demonstration that Misuser Can Be Identified

Here, it is demonstrated that a misuser can be identified by the above "11. Misuse Detection and Misuser Identification Procedure", in other words, that one having not performed misuse cannot be mistakenly identified as a misuser.

The above step (1) is misuse detection.

Also, in the above step (2), when a record included in a transfer history has inconsistency, one having performed falsification is identified based on the inconsistency. Success of the identification procedure is demonstrated below by showing a contrapositive case in which, as far as content holding apparatus properly operates to properly performing the above content transfer procedure, the apparatus cannot be mistakenly identified as a content holding apparatus having performed misuse.

Record n, added when content or an electronic ticket is transferred from one content holding apparatus (HIDₙ₋₁) to another content holding apparatus (HIDₙ), bears an electronic signature of HIDₙ₋₁ (as described above). Step (3) causes the content holding apparatus HIDₙ to verify the electronic signature, and the apparatus should refuse to receive the electronic signature when it lacks consistency. Therefore, based on the assumption (2) and the precondition that the content holding apparatus properly operates, the transfer history to which correct record n is added is delivered to the next content holding apparatus HIDₙ₊₁. When one content holding apparatus HIDₙ is noted, it is regarded as misused in the above step (2) in a case in which, when newer records are followed, inconsistency is detected for the first time in record n which is received b the content holding apparatus HIDₙ. However, the electronic signature of record n is not inconsistent unless a subsequent ticket possessor performs misuse.

Next, in a case in which a content holding apparatus to which content is transferred after HIDₙ performs misuse, for example, assuming a case in which a content holding apparatus having unique number HIDₚ (p>n) alters any previous record, the possibility of alteration causing the electronic signature of record n to lose inconsistency is considered. Record p bears an electronic signature of HIDₚ₋₁, and the electronic signature corresponds to the entire transfer history including record p. Therefore, alteration of certain record k (k<p) causes not only the electronic signature of record k but also electronic signatures of all the records between record k and record p to be inconsistent.

That HIDₚ can dissolve the inconsistency of all the records in that portion is limited to a case in which all content holding apparatuses having given electronic signatures on the records are possessed by one party or its related party. Since the preconditions cause the content holding apparatus HIDₙ to properly operate, the consistency of the electronic signature of the content holding apparatus HID_{n,} included in record n, cannot be established. Accordingly, when record n is included between record k and record p, it is understood that alteration cannot be performed so that record n is inconsistent and records n+1 and thereafter are maintained to be consistent.

In the above step (3), falsification of each record of the transfer history so that its consistency is maintained is handled. As described above, when the content holding apparatus HIDₚ alters past record k, all the records from record k to record p are inconsistent. Based on the assumption (1), the content holding apparatus HIDₚ enables, among the above records, only a transfer history record generated in the past by one party or colluding party to have consistency. Accordingly, what the content holding apparatus HIDₚ can perform is that it alters such transfer history record R_{q}, and abandons subsequent inconsistent transfer history records, or that is abandons all the existing transfer history records and creates the first record of the transfer history. In the former case, detection cannot be performed. In the latter case, detection can be performed because a sender apparatus, represented by the start record, differs in electronic signature from an issuer of content or an electronic ticket.

A conclusion of the above discussion indicates that examination of the consistency of a transfer history detects misuse, excluding the case of altering transfer history records generated in the past by a misuser or one colluding with the misuser, and deleting the subsequent records, or the case of not falsifying a transfer history.

Therefore, when a misuser having reproduced content by using the content holding apparatus HIDₚ avoids being identified by examination of the consistency of the transfer history itself, the misuser performs normal content transfer to add record p+1, or alters the transfer history record R_{q} generated in the past by the misuser or the colluding party to R_{q}' and deletes transfer history records after R_{q}.

The above step (4) handles these cases. Because, in each case, the transfer history includes a record in which the number of the misuser or the colluding party corresponds to the content transferring side, and performing the above content transfer a total of two or more times enables the above record as a branching record. Even if the misuser transfers content to the same party, a nonce in a record which corresponds this transfer is inconsistent in each time unless the same party performs misuse. Thus, the record is detected as a branching record.

The foregoing has indicated that the steps (1) to (4) of the misuse detection and misuser identification enable detection of misuse and misuser detection.

### 13. Encryption of Transfer History

Here, the anonymity of content distribution is handled again.

As already described, the correspondence between the possessor of each apparatus and HIDᵢ which is a content holding apparatus's unique number is understood only the management center CA 70, whereby the anonymity of content distribution can be protected for ordinary users other than the management center CA 70.

However, on a case-by-case basis, collecting records in which what items of content are held by a particular holding apparatus (equivalent to correspondence with a particular individual) is important information. Also, when the correspondence between an apparatus's unique number HIDᵢ and a user is specified by some method, a transfer history is a key to knowing that a particular individual likes what content, so that the privacy of a content user might be violated.

For coping with such a case, a method for preventing a transfer history from being referred to by any one excluding the management center CA 70 and a party concerned about content transfer is described below. For the purpose, first, the management center CA 70 generates a pair of a public key cryptosystem public key and secret key. Here, the public key of the management center CA 70 is represented by P_{CA'} and the secret key is represented by S_{CA}. The management center CA 70 opens only the public key P_{CA}. The user uses the public key P_{CA} to encrypt a transfer history. This enables the management center CA 70 to refer to the transfer history.

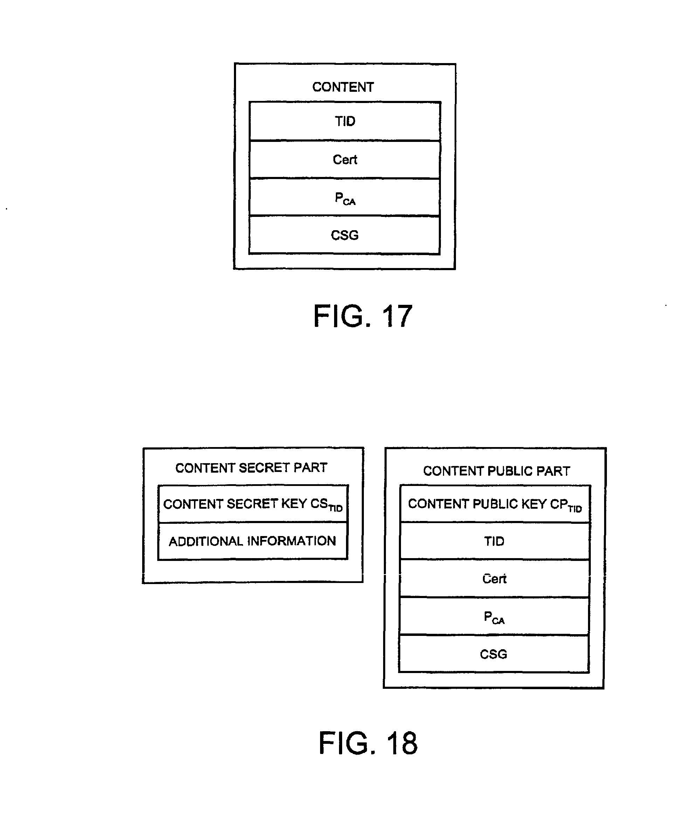

The opened public key P_{CA} may be included in, for example, content so as not to be altered. Fig. 17 shows a state in which the public key P_{CA} is included in content having a configuration as shown in Fig. 3, and Fig. 18 shows a state in which the public key P_{CA} is included in content having a configuration as shown in Fig. 5. Also, the transfer history is distributed, with its records all encrypted by using P_{CA}, excluding content identification number TID.

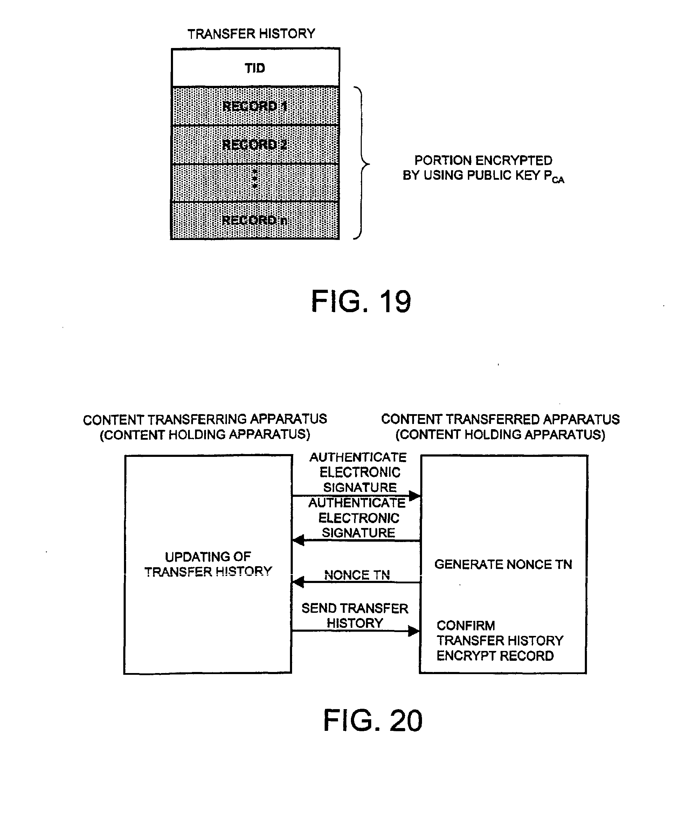

Fig. 20 shows a schematic content transfer process in the case of encrypting the transfer history. This case may use a process similar to the content transfer process in the case "having a transfer history" which has already been described with reference to Fig. 13. In transfer history updating, an electronic signature which is included in a new record generated by a content transferring content holding apparatus corresponds to the entirety of a transfer history including encrypted records corresponding to previous transfers. The transfer history is delivered to a content-transferred content holding apparatus, with the new added record unencrypted.

The content-transferred content holding apparatus verifies the electronic signature included in the new record when confirming the transfer history. After that, after the verification successfully ends, the new record is encrypted by using the public key P_{CA} of the management center CA 70, and is used to replace a new unencrypted record at the end of the transfer history.

Next, misuse detection and misuser detection are described. The misuser includes one having reproduced content, one having falsified a transfer history, and one having not duly encrypted transfer history records by using the public key P_{CA} of the management center CA 70.

A process for the misuse detection and misuser detection may be similar to that already described. However, when a record included in a transfer history is verified in step (2), the operation of decrypting each record by using the secret key S_{CA} of the management center CA 70 is added. The validity of each record is proven based on the ability to use the secret key S_{CA} to perform proper decryption and the validity of the electronic signature in the record.

When a record is not valid, that is, a record cannot be properly decrypted, or an electronic signature is not valid, it is indicated that a content holding apparatus, which has received the record, that is, a content holding apparatus, which has sent the next record from the record, has performed misuse. A description of points other than that is omitted since they are similar to those in the case of not encrypting the transfer history.

As described above, in the case of encrypting each record of a transfer history by using the public key P_{CA} of the management center CA 70, the transfer history can be prevented from being read by any one excluding a predetermined system manager. As a result, the system manager can specify a misused content holding apparatus, and it is concealed from an ordinary content user that certain content has passed through which content holding apparatus.

### Supplement

The present invention has been fully described with reference to a specific embodiment. However, it is obvious for a person skilled in the art to modify or substitute the embodiment without departing from the gist of the present invention. In short, the present invention has been disclosed in the form of exemplification, and should not be limitedly interpreted. To determine the gist of the present invention, the section of the scope of claims at the beginning should be considered.

### [Industrial Applicability]

According to the present invention, a superior information processing apparatus and method, and storage medium can be provided in which, by holding digital information on durable hardware, the digital information can be protected from misuse in the process of repeatedly transferring the digital information among a plurality of apparatuses.

According to the present invention, a superior information processing apparatus and method, and storage medium can be provided in which, in the process of repeatedly transferring digital information among a plurality of apparatuses, in case that apparatus hardware is analyzed or altered, the digital information can be protected from misuse.

According to the present invention, a superior information processing apparatus and method, and storage medium can be provided in which, by detecting misuse of digital information caused by an analysis or alteration of hardware, potential intention leading to a hardware analysis or alteration can be suppressed.

According to the present invention, even in a case in which, in an apparatus implementing a function of preventing reproduction or alteration of information content by using tamper resistance of hardware, even if an unauthorized analysis of hardware is performed and content is reproduced and transferred to another apparatus for distribution, the content is recovered and examined, whereby occurrence of misuse is detected, and a misused apparatus can be specified.

In the present invention, in order to realize a function of examining a transfer history of content, confirmation of whether or not content is reproduced does not always need to be performed whenever the content is exchanged between apparatuses. Since the confirmation of whether or not content is reproduced does not always need to be performed whenever the content is exchanged between apparatuses, it is not necessary to confirm an online state in content exchange, and the calculator load and memory capacity required for detecting misuse can be reduced.

If the misuser tries to obtain a profit by reproducing content as a result of analyzing or altering hardware, the present invention can specify a misused content holding apparatus and can identify or focus attention to a misuser as the possessor of the apparatus. Thus, the present invention has an advantage in that the misuser's intention of analyzing or altering hardware can be suppressed. Also, the anonymity of a content user, that is, privacy information in which who used what content, can be protected while the misuser can be identified.

## Claims

1. An information processing apparatus for performing inter-apparatus content exchange, comprising:
communication means for transmitting and/or receiving content and a transfer history of the content;
unique information holding means for holding apparatus-unique information;
authentication means for performing mutual authentication with a content-exchanging apparatus of another party;
content holding means for holding the content; and
transfer history management means for managing the transfer history of the content.

2. An information processing apparatus according to claim 1, wherein said authentication means and the content-exchanging apparatus of the other party mutually authenticate electronic signatures of both.

3. An information processing apparatus according to claim 1, wherein said communication means transmits the content to the apparatus of the other party, which is successfully authenticated by said authentication means.

4. An information processing apparatus according to claim 1, wherein said content holding means erases the content transmitted by said communication means.

5. An information processing apparatus according to claim 1, wherein:
in a content receiving mode, said transfer history management means generates a nonce; and
in a content transmitting mode, said transfer history management means adds, to the transfer history of the content, a new record including apparatus-unique information SID on a content transmitting side, apparatus-unique information RID on a content receiving side, a nonce TN generated by the content receiving side, and an electronic signature TSG for the entirety of the transfer history of the content.

6. An information processing apparatus according to claim 5, wherein, in the content receiving mode, by confirming that the end record of the transfer history of the content includes apparatus-unique information SID on the content transmitting side, apparatus-unique information RID on the content receiving side, and a nonce TN generated by said transfer history management means, and/or that the electronic signature is a valid signature of the apparatus on the content transmitting side which corresponds to the transfer history, said transfer history management means checks the transfer history of the content, and examines whether or not unique information possessed by the content is consistent between the content transmitting and receiving sides.

7. An information processing apparatus according to claim 5, wherein, when succeeding in checking the end record of the transfer history of the content, said transfer history management means replaces the checked record with a record obtained by using a public key P_{CA} of a predetermined management center CA to encrypt the checked record.

8. An information processing apparatus according to claim 1, wherein said communication means receives content from the apparatus of the other party, which is successfully authenticated by said authentication means, after said transfer history management means confirms the transfer history.

9. An information processing apparatus for recovering content distributed with a transfer history among a plurality of apparatuses,
wherein:
the transfer history includes:
content-unique information TID; and
records to which an addition is made whenever the content is transferred; and
said information processing apparatus comprises:
communication means for receiving the content and the transfer history; and
misuse detecting means for detecting misuse in the distribution process of the content by checking the transfer history.

10. An information processing apparatus according to claim 9, wherein said misuse detecting means initiates detection of misuse in response to receiving content having the same content-unique information TID two or more times.

11. An information processing apparatus according to claim 9, wherein:
each record of the transfer history includes apparatus-unique information SID on a content transmitting side, apparatus-unique information RID on a content receiving side, a nonce TN generated by an apparatus on the content receiving side, and an electronic signature TSG by an apparatus on the content transmitting side for the entirety of the transfer history of the content; and
said misuse detecting means verifies an electronic signature for each record which is included in the transfer history, and specifies, as a misuser, an apparatus on the content transmitting side which gives an inconsistent electronic signature.

12. An information processing apparatus according to claim 9, wherein:
each record of the transfer history includes apparatus-unique information SID on a content transmitting side, apparatus-unique information RID on a content receiving side, a nonce TN generated by an apparatus on the content receiving side, and an electronic signature TSG by an apparatus on the content transmitting side for the entirety of the transfer history of the content; and
when an SID included in the start record of the transfer history does not represent a predetermined content-issuing apparatus, said misuse detecting means specifies, as a misuser, an apparatus identified by the SID.

13. An information processing apparatus according to claim 9, wherein:
each record of the transfer history includes apparatus-unique information SID on a content transmitting side, apparatus-unique information RID on a content receiving side, a nonce TN generated by an apparatus on the content receiving side, and an electronic signature TSG by an apparatus on the content transmitting side for the entirety of the transfer history of the content; and
in said misuse detecting means, when a content item having the same content-unique information is received two or more times, by comparing the transfer histories of the received content items, and searching for a branching record in which, although a transfer history, attached to content having the same content unique information TID, duly begins with the start record of apparatus-unique information SID on a content transmitting side, and has identical content records halfway, the transfer history begins to differ, an apparatus identified by apparatus-unique information SID on the content transmitting side in a record branching off is specified as a misuser.

14. An information processing apparatus according to claim 9, wherein, in said misuse detecting means:
when each record of the transfer history is encrypted by using a public key P_{CA} of a predetermined management center, the records included in the transfer history are decrypted by using a secret key S_{CA} of the management center CA and are checked in order from the latest record; and
when a record which cannot be duly decrypted or whose signature cannot be duly verified is detected, an apparatus receiving the record is specified as a misuser.

15. An information processing method for transferring content to another apparatus, comprising:
a step for performing mutual authentication with a content-transferred apparatus;
a step for updating a transfer history of the content;
a step for transmitting the transfer history of the content to the content-transferred apparatus; and
a step for transmitting the content to the content-transferred apparatus after performing the mutual authentication and confirming a transfer history from the content-transferred apparatus.

16. An information processing method according to claim 15, wherein, in the step of updating the transfer history of the content, a new record which includes content-transferring-apparatus-unique information SID, content-transferred-apparatus-unique information RID, a nonce TN generated by a content receiving side, and an electronic signature TSG for the entire transfer history of the content is added to the transfer history of the content.

17. An information processing method for receiving content transferred from another apparatus, said information processing method comprising:
a step for performing mutual authentication with a content transferring apparatus;
a step for transmitting a nonce TN to the content transferring apparatus;
a step for receiving a transfer history of the content from the content transferring apparatus;
a step for checking the received transfer history; and
a step for receiving the content from the content transferring apparatus.

18. An information processing method according to claim 17, wherein:
each record of the transfer history includes content-transferring-apparatus-unique information SID, content-transferred-apparatus-unique information RID, a nonce TN generated by the content-transferred apparatus, and an electronic signature TS by the content-transferred apparatus which corresponds to the entire transfer history of the content; and
in the step for checking the transfer history, by confirming that the end record of the transfer history of the content includes content transferring apparatus information SID, content-transferred-apparatus-unique information RID, a nonce TN generated by the method, and/or that an electronic signature TSG is a valid signature of the content transferring apparatus which corresponds to the transfer history, the transfer history of the content is checked, and it is examined whether or not unique information possessed by the content is consistent between content transmitting and receiving sides.

19. An information processing method according to claim 18, wherein, in the step for checking the transfer history, when succeeding in checking the end record of the transfer history of the content, the record is replaced with a record obtained by using a public key P_{CA} of a predetermined management center CA to encrypt the checked record.

20. An information processing method for recovering content distributed with a transfer history among a plurality of apparatuses,
wherein:
the transfer history includes:
content-unique information TID; and
records to which an addition is made whenever the content is transferred; and
said information processing method comprises:
a step for receiving content and a transfer history; and
a misuse detecting step for detecting misuse in the distribution process of content by checking the transfer history.

21. An information processing method according to claim 20, wherein, in the misuse detecting step, in response to receiving content having the content-unique information TID two or more times, detection of misuse is initiated.

22. An information processing method according to claim 20, wherein:
each record of the transfer history includes content-transferring-apparatus-unique information SID, content-receiving-apparatus-unique information RID, a nonce TN generated by the content receiving apparatus, and an electronic signature TSG by the content transferring apparatus which corresponds to the entire transfer history of the content; and
in the misuse detecting step, by verifying the electronic signature of each record which is included in the transfer history, a content transferring apparatus having given an inconsistent electronic signature is specified as a misuser.

23. An information processing method according to claim 20, wherein:
each record of the transfer history includes content-transferring-apparatus-unique information SID, content-receiving-apparatus-unique information RID, a nonce generated by a content receiving apparatus, and an electronic signature TSG by a content transmitting apparatus which corresponds to the entire transfer history of the content; and
in the misuse detecting step, when an SID included in the start record of the transfer history does not indicate a predetermined content-issuing apparatus, an apparatus identified by the SID is specified as a misuser.

24. An information processing method according to claim 20, wherein:
each record of the transfer history includes content-transferring-apparatus-unique information SID, content-receiving-apparatus-unique information RID, a nonce generated by a content receiving apparatus, and an electronic signature TSG by a content transmitting apparatus which corresponds to the entire transfer history of the content; and
in the misuse detecting step, when a content item having the same content-unique information TID is received two or more times, by comparing the transfer histories of the received content items, and searching for a branching record in which, although a transfer history, attached to content having the same content unique information TID, duly begins with the start record of content-transmitting-apparatus-unique information SID, and has identical content records halfway, the transfer history begins to differ, an apparatus identified by the content-transmitting-apparatus-unique information SID in a record branching off is specified as a misuser.

25. An information processing method according to claim 20, wherein, in the misuse detecting step:
when each record of the transfer history is encrypted by using a public key P_{CA} of a predetermined management center CA, the records included in the transfer history are decrypted by using a secret key S_{CA} of the management center CA and are checked in order from the latest record; and
when a record which cannot be duly decrypted or whose signature cannot be duly verified is detected, an apparatus receiving the record is specified as a misuser.

26. A storage medium physically storing, in a computer-readable form, computer software described so that processing for transferring content to another apparatus can be executed on a computer, said computer software comprising:
a step for performing mutual authentication with a content-transferred apparatus;
a step for updating a transfer history of the content by adding a new record including content-transferring-apparatus-unique information SID, content-transferred-apparatus-unique information RID, a nonce TN generated by a content receiving side, and an electronic signature TSG for the entire transfer history of the content;
a step for transmitting the transfer history of the content to the content-transferred apparatus; and
a step for transmitting the content to the content-transferred apparatus after performing the mutual authentication and confirming a transfer history from the content receiving apparatus.

27. A storage medium physically storing, in a computer-readable form, computer software described so that processing for receiving content transferred from another apparatus can be executed on a computer, said computer software comprising:
a step for performing mutual authentication with a content transferring apparatus;
a step for transmitting a nonce TN to a content-transferred apparatus;
a step for receiving, from the content transferring apparatus, a transfer history of content comprising content-transferring-apparatus-unique information SID, content-transferred-apparatus-unique information RID, a nonce TN generated by the content-transferred apparatus, and an electronic signature TSG by the content-transferred apparatus which corresponds to the entire transfer history of the content;
a step for checking the transfer history of the content by confirming that the end record of the transfer history includes content-transferring-apparatus-unique information SID, content-transferred-apparatus-unique information RID, and a nonce TN generated by the software, and/or that an electronic signature TSG is a valid signature of the content-transferred apparatus which corresponds to the transfer history; and
a step for receiving the content from content transferring apparatus.

28. A storage medium according to claim 27, wherein, in the step for checking the transfer history, when succeeding in checking the end record of the transfer history of the content, the record is replaced with a record obtained by using a public key P_{CA} of a predetermined management center CA to encrypt the checked record.

29. A storage medium physically storing, in a computer-readable form, computer software described so that processing for recovering content distributed with a transfer history among a plurality of apparatuses can be executed on a computer,
wherein:
the transfer history includes:
content-unique information TID; and
records to which an addition is made whenever the content is transferred; and
the computer software comprises:
a step for receiving content and a transfer history; and
a misuse detecting step for detecting misuse in the distribution process of content by checking a transfer history in response to receiving content having the same content-unique information TID two or more times.

30. A storage medium according to claim 29, wherein, in the misuse detecting step:
when each record of the transfer history is encrypted by using a public key P_{CA} of a predetermined management center CA, the records included in the transfer history are decrypted by using a secret key S_{CA} of the management center CA and are checked in order from the latest record; and
when a record which cannot be duly decrypted or whose signature cannot be duly verified is detected, an apparatus receiving the record is specified as a misuser.
